# EUROPÄISCHE PATENTSCHRIFT

(11) **EP 3 840 184 B1**
(45) Veröffentlichungstag und Bekanntmachung des Hinweises auf die Patenterteilung: **26.03.2025**
(21) Anmeldenummer: 20213657.8
(22) Anmeldetag: 14.12.2020
(51) Int. Cl.: H02K 3/28, H02K 3/12

(54) **STATOR MIT VERSETZTEN PINS FÜR EINE ELEKTRISCHE MASCHINE**
STATOR WITH OFFSET PINS FOR AN ELECTRIC MACHINE
STATOR POURVU DE GOUPILLES DÉCALÉES POUR UNE MACHINE ÉLECTRIQUE

(30) Priorität: 20.12.2019 DE 102019135426
(43) Veröffentlichungstag der Anmeldung: 23.06.2021
(73) Patentinhaber: Valeo eAutomotive Germany GmbH, 91056 Erlangen (DE)
(72) Erfinder: DOTZ, Boris, 81241 München (DE); FINGER-ALBERT, Christian, 97688 Bad Kissingen (DE)

(56) Entgegenhaltungen:
- CN-U- 209 267 302
- DE-A1- 102017 210 445
- DE-T5- 112013 003 398
- DE-T5- 112013 006 691
- US-A1- 2015 207 374
- US-B2- 9 136 738

## Beschreibung

Die Erfindung betrifft einen Stator mit versetzten Pins für eine elektrische Maschine, insbesondere einen Elektromotor.

### Stand der Technik

Elektrische Maschinen sind allgemein bekannt und finden als Elektromotor zunehmend Anwendung für den Antrieb von Fahrzeugen. Eine elektrische Maschine besteht aus einem Stator und einem Rotor.

Der Stator umfasst eine Vielzahl von Nuten, in welchen die Windungen geführt werden. Die Windungen können aus isolierten Kupferstäben, als sogenannte Pins, gebildet werden. Der Rotor befindet sich im Stator und ist mit einer Rotorwelle verbunden.

Ein solcher Pin-, UPin- oder Hairpinmotor ist beispielsweise aus DE 11 2013 006 691 T5, DE 10 2010 053 719 A1, EP 3 096 441 A1, US 2011/0025162 A1, WO 2012/072754 A2 oder

US 9,136,738 B2 bekannt.

### Aufgabe und Lösung

Aufgabe der vorliegenden Erfindung ist es, einen Stator nach Anspruch 1 mit Windungen aus Pins bereitzustellen, welcher einfach zu fertigen ist.

Erfindungsgemäß umfasst ein Stator für eine elektrische Maschine eine Vielzahl von Pins, die auf konzentrischen Kreisen mit unterschiedlichen Abständen zu einem Statormittelpunkt in Nuten im Stator angeordnet sind und jeder konzentrische Kreis einen Layer bildet, wobei jeweils sechs Pins in unterschiedlichen Layer miteinander seriell verbunden sind und eine Windung bilden, ein erster Pin der Windung befindet sich in einer ersten Nut im 6n-1 Layer, wobei n eine natürliche Zahl ist, ein zweiter Pin der Windung befindet sich in einer zweiten Nut im 6n Layer, wobei die zweite Nut einen ersten radialen Abstand in einer ersten Umfangsrichtung des Stators zu der ersten Nut aufweist, ein dritter Pin der Windung befindet sich in der ersten Nut im 6n-2 Layer, ein vierter Pin der Windung befindet sich in der zweiten Nut im 6n-3 Layer, ein fünfter Pin befindet sich in der ersten Nut im 6n-5 Layer, ein sechster Pin der Windung befindet sich in der zweiten Nut im 6n-4 Layer.

Dabei kann eine Windung die Zähne auch mehrfach umlaufen. Die Layer können von außen nach innen zum Statormittelpunkt aufsteigend nummeriert werden. Die Zahl Null gehört nicht zu den erwähnten natürlichen Zahlen.

Ein Stator mit der erfindungsgemäßen Wicklung lässt sich einfach herstellen und erzeugt ein effizientes elektromagnetisches Feld. Die Verbindungsarten stellen eine elektrisch leitfähige Verbindung zwischen den Pins in den Nuten her. Die Verbindungsart kann ein Anschweißen von Leitern an die Pins sein oder die Pins können bereits als Doppelpin, sogenannte Upins, ausgebildet sein und dadurch bereits beim Einführen in den Stator eine Verbindung herstellen. Ferner stellt auch ein Verschweißen von zueinander gebogenen Endabschnitten von Pins eine Verbindungsart dar.

Erfindungsgemäß weist der Stator eine erste Stirnseite und eine zweite Stirnseite auf und sind der erste Pin und der zweite Pin auf der zweiten Stirnseite mittels einer ersten Verbindungsart miteinander verbunden, der zweite Pin und der dritte Pin auf der ersten Stirnseite mittels einer zweiten Verbindungsart miteinander verbunden, der dritte Pin und der vierte Pin auf der zweiten Stirnseite mittels einer dritten Verbindungsart miteinander verbunden, der vierte Pin und fünfte Pin auf der ersten Stirnseite mittels einer vierten Verbindungsart miteinander verbunden, der fünfte Pin und der sechste Pin auf der zweiten Stirnseite mittels einer fünften Verbindungsart miteinander verbunden, wobei sich die erste, zweite, dritte, vierte und fünfte Verbindungsart voneinander unterscheiden.

Die unterschiedlichen Verbindungsarten ermöglichen eine verbesserte Fertigung. Eine abwechselnde Lage der Verbindungsarten auf verschiedenen Stirnseiten ermöglicht das effiziente Bilden einer Windung um die zwischen den Nuten liegenden Statorzähne.

Selbst Verbindungsarten auf derselben Stirnseite des Stators können sich durch unterschiedliche Biegerichtungen eines Pinfußes zum Stator inneren oder -äußeren unterscheiden.

Erfindungsgemäß weist der Stator zumindest zwei Windungen auf und ist zumindest der sechste Pin in der zweiten Nut mit einem siebten Pin im 6n-1 Layer in einer dritten Nut mittels einer sechsten Verbindungsart verbunden.

Eine Kombination der vorher genannten Verbindungsarten auf unterschiedlichen oder gleichen Stirnseiten des Stators ist auch möglich. Durch eine gleiche Verbindungsart auf gleichen Stirnseiten und verschiedenen Verbindungsarten auf unterschiedlichen Stirnseiten des Stators ist eine einfache und schnelle Fertigung möglich. Beispielsweise wird auf einer Stirnseite die Verbindung durch eine Art vorgebogene Pins, sogenannte Doppelpins oder auch Upins genannt, hergestellt und auf einer anderen Stirnseite des Stators werden Pins einzeln oder jeweils eine Seite des Doppelpins miteinander verschweißt. Die Schweißpunkte können an Füßen der Pins oder Doppelpins liegen.

Bevorzugt kann der Pin am Anfang einer Windung ein Endpin sein, wobei der erste Endpin als Einzelpin ausgestaltet ist. Ein Einzelpin ist beispielsweise ein IPin.

Erfindungsgemäß liegt zwischen der dritten Nut und der zweiten Nut der gleiche erste Abstand wie zwischen der zweiten Nut und der ersten Nut.

Erfindungsgemäß weist der Stator eine Vielzahl von Windungen auf, die sich über den gesamten Umfang des Stators erstrecken und dabei eine Teilspule bilden.

Das mit einer solchen Windung erzeugte Drehfeld weist weniger störende Harmonische auf und hat dadurch weniger Torqueripple und kleinere Drehmomentschwankungen sowie ein besseres NVH Verhalten. Die Wicklungen weisen eine Symmetrie auf, welche ein gleichmäßiges Drehfeld erzeugt.

In einer Ausgestaltung der Erfindung können die Endpins am Anfang oder Ende einer Spule als Einzelpins ausgestaltet sein. Ein Einzelpin ist beispielsweise ein IPin.

In einer weiteren Ausgestaltung kann je ein Pin von drei Teilspulen mittels einer siebten Verbindungsart oder einer achten Verbindungsart miteinander verbunden sein und eine Spule (201, 202) bilden. Bei diesen Pins kann es sich um sogenannte Endpins handeln, da sie das Ende einer Teilspule markieren.

Bevorzugt können die Teilspulen sechs Spulen bilden und diesen derart drei Phasen zugeordnet sein, dass sich jeweils die Pins von zwei Spulen, die einer gleichen Phase zugeordnet sind, in drei benachbarten Nuten befinden.

Weiter bevorzugt kann je ein Eingang eines Endpins von zwei Spulen mittels einer neunten Verbindungsart miteinander verbunden sein.

Bevorzugt kann je ein Ausgang eines Endpins der zwei Spulen miteinander verbunden sein und die zwei Spulen dadurch parallelgeschaltet und insbesondere einer Phase zugeordnet sein.

Die neunte Verbindungsart kann durch einen an den Pins angebrachten Leiter oder durch einen leitenden Ring hergestellt werden.

Die beiden Spulen können parallel verbunden sein und können zusätzlich von einer gleichen Phase gespeist werden. Die Parallelverbindung kann durch das paarweise Verbinden von einem ersten und siebten oder sechsten und zwölften Endpin erfolgen.

Zwei Spulen in gleichen Nuten können parallelgeschaltet und von einer Phase gespeist werden, sodass ein Stator mit Windungen für eine dreiphasige elektrische Maschine ausgebildet wird.

Ferner können jeweils zwei Phasen einen annährend identischen Strom- und Spannungsverlauf aufweisen und dadurch ein sechs Phaseninverter lediglich einen dreiphasigen Motor ansteuern. Mit dieser Anordnung ist eine Stromteilung der Schaltelemente im Inverter möglich.

Bevorzugt kann die zweite Verbindungsart einen ersten Doppelpin umfassen, der aus dem zweiten Pin und dem dritten Pin gebildet wird, wobei der erste Doppelpin zwei nach innen gebogene Pinfüße mit je einem Schweißpunkt aufweist und den ersten radialen Abstand überbrückt.

Der Doppelpin kann aus einem Stab bestehen, der derart gebogen wird, sodass zwei Pins, eine Verbindung zwischen diesen zwei Pins an einem ersten Ende und Pinfüße an einem zweiten Ende entstehen.

Der Doppelpin kann von einer Stirnseite in den Stator eingeführt und auf der anderen Stirnseite an Pinfüßen eines weiteren Doppelpin verschweißt werden.

Der erste Abstand beschreibt eine zu überbrückende Nutanzahl. Der tatsächlich zu überbrückende räumliche Abstand hängt von der Lage des Pins im Layer ab, weil die Doppelpins unterschiedliche Layer verbinden.

Weiter bevorzugt kann die vierte Verbindungsart einen zweiten Doppelpin umfassen, der aus dem vierten Pin und dem fünften Pin gebildet wird, wobei der zweite Doppelpin zwei nach innen gebogene Pinfüße mit je einem Schweißpunkt aufweist und den ersten radialen Abstand überbrückt.

In einer Ausgestaltung der Erfindung kann die sechste Verbindungsart einen dritten Doppelpin umfassen, der aus dem sechsten Pin und dem siebten oder neunten Pin gebildet wird, wobei der dritte Doppelpin zwei nach außen gebogene Pinfüße mit je einem Schweißpunkt aufweist und den ersten radialen Abstand überbrückt.

Bevorzugt kann die siebte Verbindungsart einen vierten Doppelpin umfassen, der aus einem zweiten oder vierten Endpin und einem dritten oder fünften Endpin gebildet wird, wobei der vierte Doppelpin zwei nach außen gebogene Pinfüße mit je einem Schweißpunkt aufweist und einen zweiten radialen Abstand überbrückt.

Weiter bevorzugt kann die achte Verbindungsart einen fünften Doppelpin umfassen, der aus einem achten oder zehnten Endpin und einem neunten oder elften Endpin gebildet wird, wobei der fünfte Doppelpin zwei nach innen gebogene Pinfüße mit je einem Schweißpunkt aufweist und einen zweiten radialen Abstand überbrückt.

In einer Ausgestaltung der Erfindung kann ein erster Einzelpin einen ersten Endpin umfassen und einen im Uhrzeigersinn gebogenen Pinfuß mit einem Schweißpunkt aufweisen.

In einer weiteren bevorzugten Ausgestaltung der Erfindung kann ein zweiter Einzelpin einen sechsten Endpin umfassen und einen gegen den Uhrzeigersinn gebogenen Pinfuß mit einem Schweißpunkt aufweisen.

Bevorzugt kann ein dritter Einzelpin einen siebten Endpin umfassen und einen gegen den Uhrzeigersinn gebogenen Pinfuß mit einem Schweißpunkt aufweisen.

Weiter bevorzugt kann ein vierter Einzelpin einen zwölften Endpin umfassen und einen im Uhrzeigersinn gebogenen Pinfuß mit einem Schweißpunkt aufweisen.

In einer Ausgestaltung kann die erste Verbindungsart durch eine Schweißverbindung eines ersten Schweißpunkts am Pinfuß des dritten Doppelpins oder des vierten Doppelpins oder des ersten Einzelpins mit einem zweiten Schweißpunkt am Pinfuß des ersten Doppelpins oder des fünften Doppelpins oder des dritten Einzelpins gebildet werden.

Bevorzugt kann die dritte Verbindungsart durch eine Schweißverbindung eines dritten Schweißpunkts am Pinfuß des ersten Doppelpins oder des fünften Doppelpins mit einem vierten Schweißpunkt am Pinfuß des zweiten Doppelpins gebildet werden.

Weiter bevorzugt kann die fünfte Verbindungsart durch eine Schweißverbindung eines fünften Schweißpunkts am Pinfuß des zweiten Doppelpins mit einem sechsten Schweißpunkt am Pinfuß des dritten Doppelpins oder des vierten Doppelpins oder des zweiten Einzelpins gebildet werden.

Erfindungsgemäß weist ein Fahrzeug eine elektrische Maschine mit einem Stator gemäß einer der bevorzugten Ausgestaltungen auf.

### Figurenbeschreibung

Figur 1 zeigt einen Stator.
Figur 2 zeigt einen Stator mit sechs Nuten und sechs Layer.
Figur 3 zeigt ein Wickelschema einer ersten Teilspule.
Figur 4 zeigt ein Wickelschema einer zweiten Teilspule.
Figur 5 zeigt ein Wickelschema einer dritten Teilspule.
Figur 6 zeigt einen Stator mit drei Teilspulen und deren Verbindung miteinander und somit eine erste Spule.
Figur 7 zeigt ein Wickelschema einer weiteren ersten Teilspule.
Figur 8 zeigt ein Wickelschema einer weiteren zweiten Teilspule.
Figur 9 zeigt ein Wickelschema einer weiteren dritten Teilspule.
Figur 10 zeigt einen Stator mit drei weiteren Teilspulen und deren Verbindung miteinander und somit eine zweite Spule.
Figur 11 zeigt einen Stator mit zwei Spulen, bestehend aus jeweils drei Teilspulen.
Figur 12 zeigt einen Stator mit zwei weiteren Spulen.
Figur 13 zeigt einen Stator mit zwei weiteren Spulen.
Figur 14 zeigt einen Stator mit sechs Spulen.
Figur 15 zeigt ein Windungsschema einer ersten Spule.
Figur 16 zeigt ein Windungsschema einer zweiten Spule.
Figur 17 zeigt zwei Einzelpins.
Figur 18 zeigt zwei Einzelpins.
Figur 19 einen ersten Doppelpin.
Figur 20 einen zweiten Doppelpin.
Figur 21 einen dritten Doppelpin.
Figur 22 einen vierten Doppelpin.
Figur 23 einen fünften Doppelpin.
Figur 24 zeigt ein Fahrzeug mit einer elektrischen Maschine insbesondere einem Elektromotor mit einem Stator.

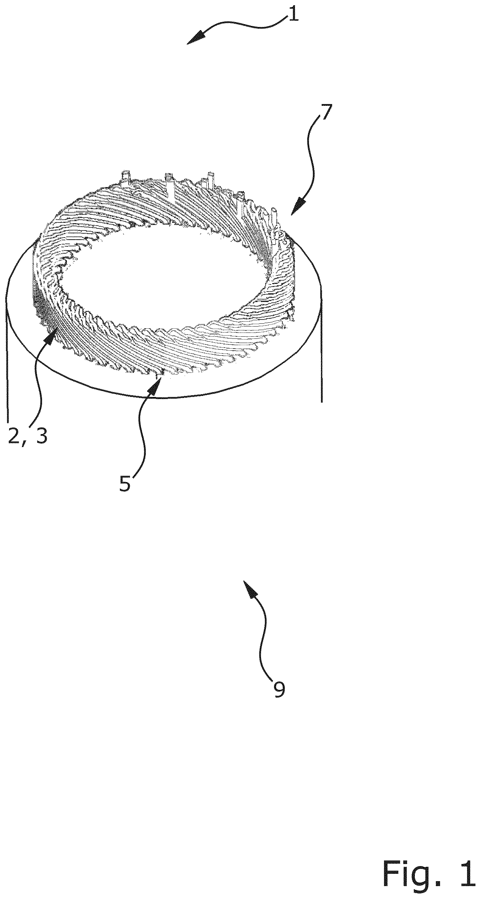

Figur 1 zeigt einen Stator 1 mit einer Vielzahl an Nuten 5 in welchen Pins 2, 3 geführt werden. Der Stator 1 weist eine erste Stirnseite 7 und eine gegenüberliegende zweite Stirnseite 9 auf. Selbstverständlich ist zum Betrieb einer elektrischen Maschine ferner ein Rotor nötig.

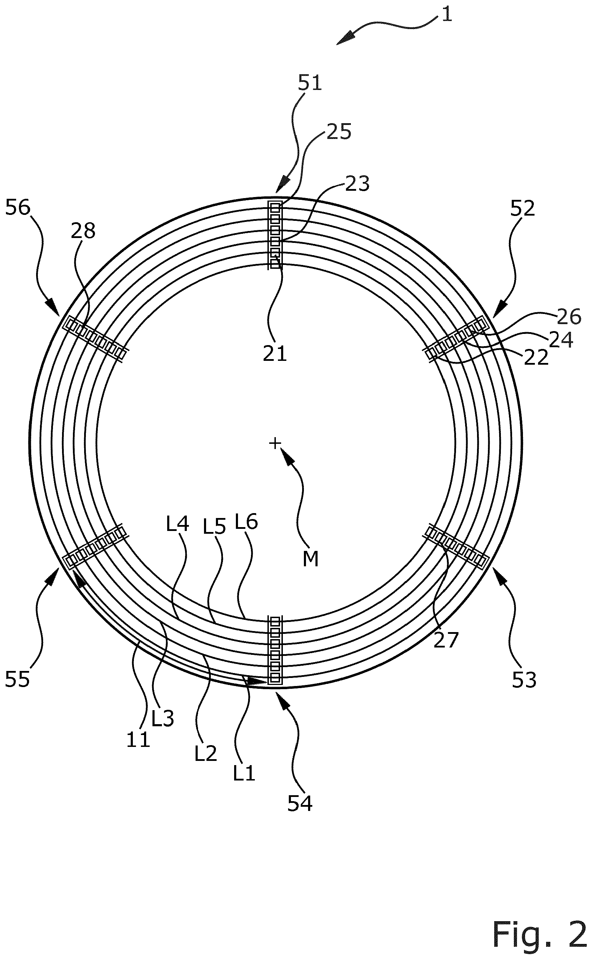

Figur 2 zeigt einen Stator 1 mit Nuten und Pins auf sechs Layer, wobei lediglich sechs Nuten 51 - 56 dargestellt sind. In den Nuten sind exemplarisch Pins 21 - 28 angeordnet. Die Pins liegen nebeneinander in einer Nut. Im Beispiel der Figur 2 ist für sechs nebeneinanderliegenden Pins Platz in einer Nut. Die sechs Pins innerhalb einer Nut liegen somit auf unterschiedlichen konzentrischen Kreisen L1, L2, L3, L4, L5, L6 um den Mittelpunkt M des Stators, die somit einzelne Layer bilden. Zwischen jeweils zwei Nuten liegt ein erster Abstand 11, welcher zwischen allen in Figur 2 gezeigten Nuten identisch ist.

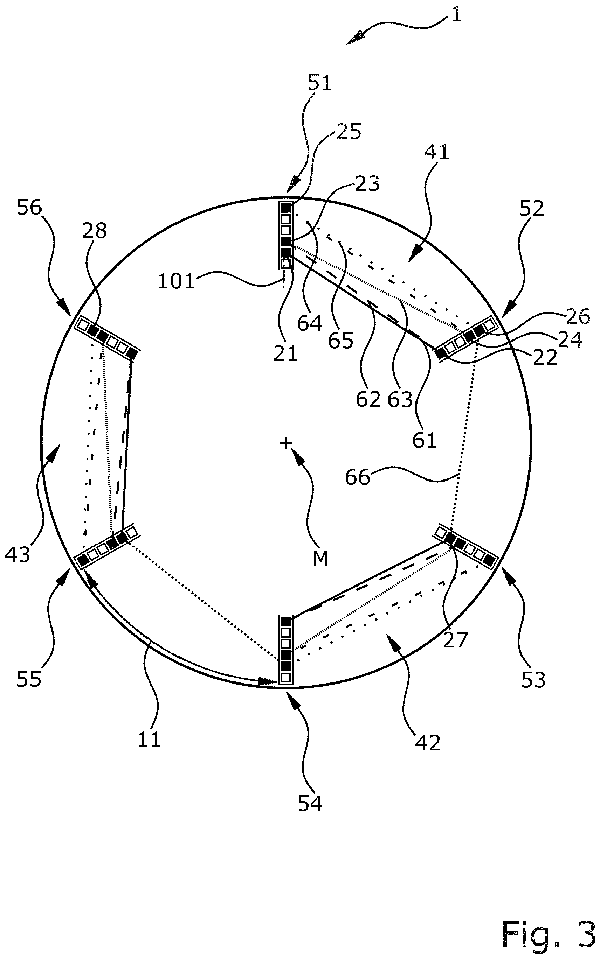

Figur 3 zeigt den Stator 1 aus Figur 2. Die Pins sind weiterhin auf konzentrischen Kreisen, also Layer, angeordnet, wobei die konzentrischen Kreise wegen einer besseren Darstellung nicht eingezeichnet sind. In Figur 3 ist dargestellt, welche Pins miteinander in Serie verbunden sind. Ein erster Pin 21 befindet sich in einer ersten Nut 51 im Layer L5. Dieser erste Pin 21 ist mittels einer ersten Verbindungsart 61, als durchgezogene Linie dargestellt, mit einem zweiten Pin 22 in einer zweiten Nut 52 verbunden. Der zweite Pin 22 befindet sich im Layer L6. Zwischen der ersten Nut 51 und der zweiten Nut 52 liegt ein erster Abstand 11 der gleichlang wie der erste Abstand 11 aus Figur 2 ist.

Der zweite Pin 22 ist mittels einer zweiten Verbindungsart 62, als gestrichelte Linie dargestellt, mit einem dritten Pin 23 in der ersten Nut 51 verbunden. Der dritte Pin 23 liegt im Layer L4 und in derselben Nut wie der erste Pin 21. Der dritte Pin 23 ist über eine dritte Verbindungsart 63, als gepunktete Linie mit sehr kurzen Abständen dargestellt, mit einem vierten Pin 24 verbunden. Der vierte Pin 24 liegt in der zweiten Nut 52 also in derselben Nut wie der zweite Pin 22. Der vierte Pin 24 liegt im Layer L3.

Der vierte Pin 24 ist mittels einer vierten Verbindungsart 64, als gestrichelte Linie mit langen Abständen dargestellt, mit einem fünften Pin 25 in der ersten Nut 51 verbunden. Der fünfte Pin 25 befindet sich wiederum in der ersten Nut 51, also in derselben Nut wie der erste Pin 21 und der dritte Pin 23. Der fünfte Pin 25 liegt im Layer L1. Zwischen dem dritten Pin 23 und dem fünften Pin 25 in der ersten Nut 51 ist noch Platz für zwei weiteren Pins in Layer L2 und L3. Außerdem ist in der ersten Nut 51 noch Platz für einen weiteren Pin in Layer L6. Der fünfte Pin 25 ist über eine fünfte Verbindungsart 65, als gepunktete Linie mit langen Abständen dargestellt, mit einem sechsten Pin 26 verbunden. Der sechste Pin 26 liegt in der zweiten Nut 52, also derselben Nut wie der zweite Pin 22 und vierte Pin 24. Der sechste Pin 26 liegt im Layer L2. Zwischen dem zweiten Pin 22 und dem vierten Pin 24 ist noch Platz in der zweiten Nut 52 für zwei weitere Pins in den Layer L4 und L5. Außerdem ist in der zweiten Nut 52 noch Platz für einen weiteren Pin in Layer L1.

Die Verbindung des ersten, zweiten, dritten, vierten, fünften und sechsten Pins bildet eine erste Windung 41. Der erste Pin 21 ist gleichzeitig auch ein erster Endpin. Dieser Endpin 21 weist einen Eingang 101 zum Anschluss einer Energiequelle, beispielsweise eines Inverters, auf. Der erste Endpin 21 ist daher nur mit einem weiteren Pin, also dem zweiten Pin 22, verbunden. Der erste Endpin 21 kann somit als sogenannter Einzelpin oder Ipin ausgestaltet sein.

Der sechste Pin 26 ist über eine sechste Verbindungsart 66, als gepunktete Linie mit kurzen Abständen dargestellt, mit einem siebten Pin 27 in Layer L5 in einer dritten Nut 53 verbunden. Mit dem siebten Pin 27 beginnt die vorher beschriebene serielle Verbindung der im Stator nachfolgenden Pins erneut, wobei der siebte Pin 27 ähnlich zum ersten Pin 21 mit einem Versatz der Nut um 120 Grad ist. Der siebte Pin 27 ist im Gegensatz zum ersten Pin 21 kein Endpin, da der siebte Pin 27 mit zwei weiteren Pins, also dem sechsten Pin 26 und einem weiteren Pin in Nut 54, Layer L1 verbunden ist.

Die serielle Verbindung des siebten Pins 27 mit weiteren Pins in der Nut 54 bildet eine zweite Windung 42. Die erste, zweite, dritte, vierte und fünfte Verbindungsart 61 - 65 zwischen diesen Pins ist identisch zu der jeweiligen ersten, zweiten, dritten, vierten, fünften Verbindungsart 61 - 65 der Pins der ersten Windung 41.

Die beiden Windungen 41, 42 sind durch die sechste Verbindungsart 66 verbunden. Durch die Fortsetzung der seriellen Verbindung wird die dritte Windung 43 in zwei weiteren Nuten 55 und 56 gebildet. Die Windungen 41, 42, 43 sind jeweils mit der sechsten Verbindungsart 66 verbunden. Die sechste Verbindungsart 66 zwischen den jeweiligen Windungen ist somit identisch. Auch die erste, zweite, dritte, vierte und fünfte Verbindungsart 61 - 65 zwischen den Pins der dritten Windung 43 ist identisch zu der ersten, zweiten, dritten, vierten und fünften Verbindungsart 61 - 65 der ersten und zweiten Windung 41, 42.

Durch die Fortsetzung der seriellen Verbindung wird die vierte Windung 44 in zwei weiteren Nuten 57 und 58 gebildet. Die Windungen 41, 42, 43, 44 sind jeweils mit der sechsten Verbindungsart 66 verbunden. Die sechste Verbindungsart 66 zwischen den jeweiligen Windungen ist somit identisch. Auch die erste, zweite, dritte, vierte und fünfte Verbindungsart 61 - 65 zwischen den Pins der vierten Windung 44 ist identisch zu der ersten, zweiten, dritten, vierten und fünften Verbindungsart 61 - 65 der ersten, zweiten und dritten Windung 41, 42, 43.

Die vier Windungen 41, 42, 43, 44 bilden durch einen Umlauf um den Stator 1 mit dem Uhrzeigersinn eine erste Teilspule.

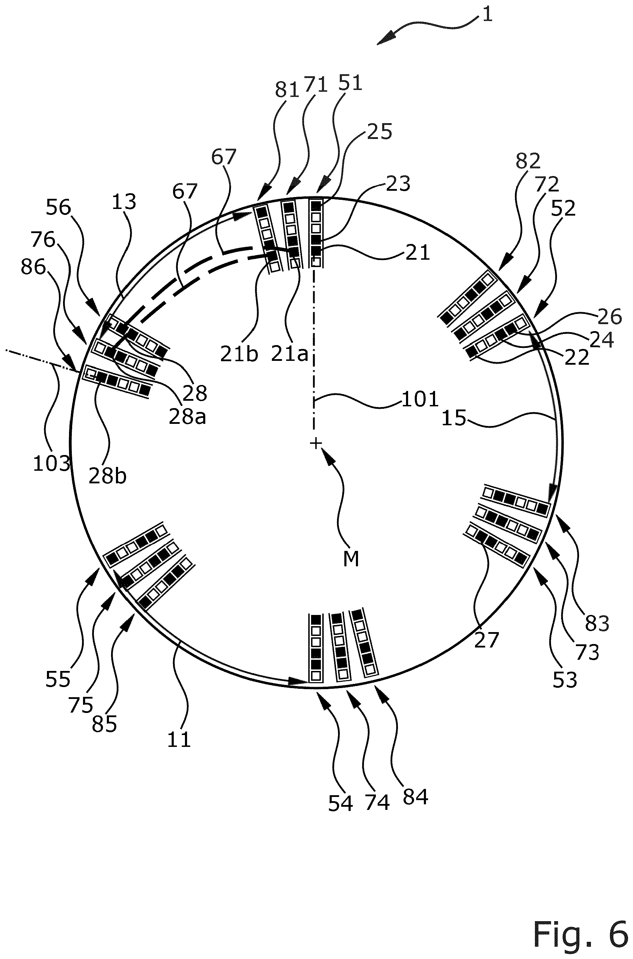

Der erste Pin 21 weist ferner einen Eingang 101 für den Anschluss einer Energiequelle auf. Der erste Pin 21 der Windung 41 stellt somit einen ersten Endpin dar. Die Teilspule endet mit dem Pin 28 der dritten Windung 43. Der letzte Pin 28 der dritten Windung 43 stellt somit einen zweiten Endpin dar. Der zweite Endpin 28 weist im Gegensatz zum ersten Endpin 21 jedoch Verbindungen zu zwei weiteren Pins auf, wie in Verbindung mit Figur 6 erläutert.

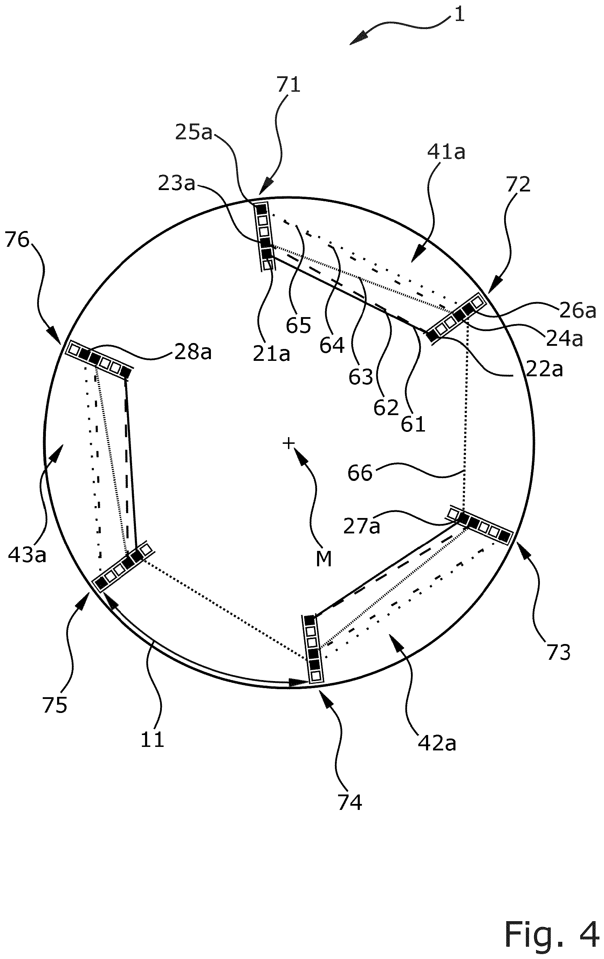

Figur 4 zeigt den Stator 1 aus Figur 3, wobei dort sechs weitere Nuten 71 - 76 gezeigt sind, die sich in direkter Nachbarschaft zu den Nuten 51 - 56 aus Figur 3 befinden. Die Abstand 11 weisen die gleichen Länge wie in Figur 3 auf.

Die Pins 21a - 28a sind in gleicher Weise wie die Pins 21 - 28 der Figur 3 verbunden. Selbst die Verbindungsart ist identisch zur Figur 3 und durch die gleichen Bezugszeichen deutlich gemacht. In gleicher Weise wie bei Figur 3 beschrieben, werden die Windungen 41a, 42a, 43a gebildet und sind mit dem Uhrzeigersinn miteinander durch die sechste Verbindungsart 66 verbunden.

Die drei Windungen 41a, 42a, 43a bilden durch einen Umlauf um den Stator 1 eine zweite Teilspule. Die Teilspule beginnt mit einem Pin 21a, der ein dritter Endpin ist. Der dritte Endpin 21a weist im Gegensatz zum ersten Endpin 21 jedoch Verbindungen zu zwei weiteren Pins auf, wie in Verbindung mit Figur 6 erläutert. Die Teilspule endet mit dem Pin 28a der Windung 43a. Der letzte Pin 28a der Windung 43a stellt somit einen vierten Endpin 28a dar.

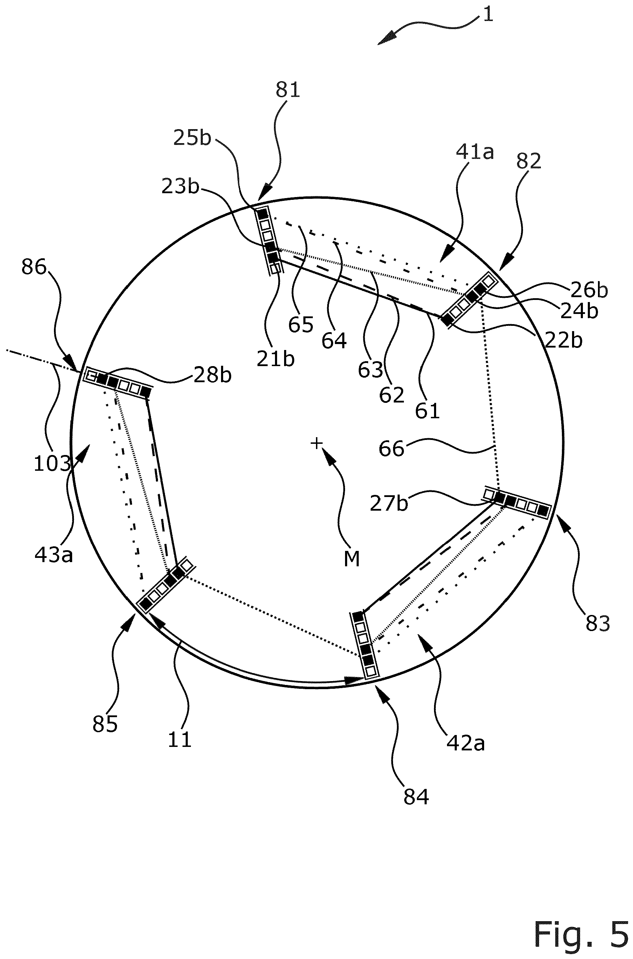

Figur 5 zeigt den Stator 1 aus Figur 3 und 4, wobei dort sechs weitere Nuten 81 - 86 gezeigt sind, die sich in direkter Nachbarschaft zu den Nuten 71 - 76 aus Figur 4 befinden. Der Abstand 11 weisen die gleiche Länge wie in Figur 3 auf.

Die Pins 21b - 28b sind in gleicher Weise wie die Pins 21 - 28 der Figur 3 und die Pins 21a - 28a der Figur 4 verbunden. Selbst die Verbindungsart ist identisch zu den Figuren 3 und 4 und durch gleiche Bezugszeichen deutlich gemacht. In gleicher Weise wie bei Figur 3 und 4 beschrieben, werden die Windungen 41b, 42b, 43b gebildet und sind mit dem Uhrzeigersinn miteinander durch die sechste Verbindungsart 66 verbunden.

Die drei Windungen 41b, 42b, 43b bilden durch einen Umlauf um den Stator 1 eine dritte Teilspule. Die Teilspule beginnt mit einem Pin 21b, der ein fünfter Endpin ist. Der fünfte Endpin 21b weist im Gegensatz zum ersten Endpin 21 jedoch Verbindungen zu zwei weiteren Pins auf, wie in Verbindung mit Figur 6 erläutert. Die Teilspule endet mit dem Pin 28b der Windung 43b. Der letzte Pin 28b der Windung 43b stellt somit einen sechsten Endpin dar. Der sechste Endpin 28b wiederum ist ähnlich zum ersten Endpin 21 ausgebildet, also beispielsweise als Einzelpin oder Ipin und weist einen Ausgang 103 zum Anschluss einer Energiequelle auf.

Figur 6 zeigt eine Pinbelegung durch die erste, zweite und dritte Teilspule aus Figur 3, 4 und 5, welche durch schwarze Vierecke dargestellt sind. Gleiche Bezugszeichen bezeichnen gleiche Pins, Nuten, Verbindungen in den Figuren.

Der zweite Endpin 28 der dritten Windung 43 der ersten Teilspule in Nut 56, Layer L2 und der dritte Endpin 21a der ersten Windung 41a der zweiten Teilspule in Nut 71, Layer L5 ist mit einer siebten Verbindungsart 67 verbunden. Die siebte Verbindungsart überwindet einen zweiten Abstand 13, der um eine Nut kürzer als der erste Abstand 11 ist. Der vierte Endpin 28a der Windung 43a der zweiten Teilspule in Nut 76, Layer L5 und der fünfte Endpin 21b der ersten Windung 41b der dritten Teilspule in Nut 81, Layer L2 ist mit einer siebten Verbindungsart 67 verbunden. Die siebte Verbindungsart überwindet den zweiten Abstand 13.

Somit verbindet die siebte Verbindungsart 67 jeweils zwei Teilspulen, wobei drei Teilspulen eine erste Spule 201 mit einem Eingang 101 und einem Ausgang 103 nach dreimaligem radialen Umlauf um den Stator mit dem Uhrzeigersinn bilden.

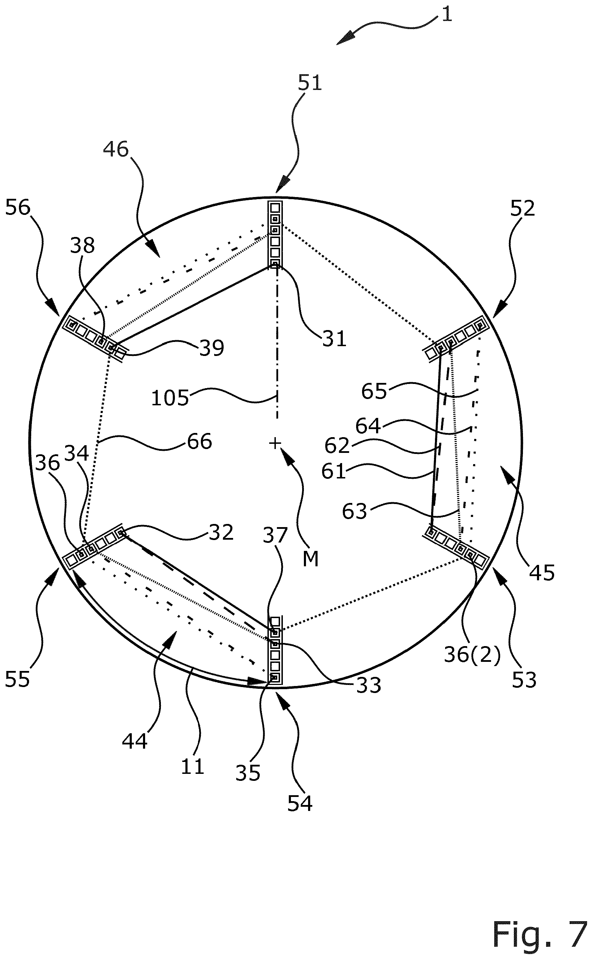

Figur 7 zeigt den Stator 1 aus Figur 2. Die Pins sind weiterhin auf konzentrischen Kreisen, also Layer, angeordnet, wobei die konzentrischen Kreise wegen einer besseren Darstellung nicht eingezeichnet sind. Es ist dargestellt, welche Pins, als schwarze Vierecke auf weißem Grund dargestellt, miteinander in Serie verbunden sind und eine erste Teilspule einer zweiten Spule 202 bilden.

Ein erster Pin 31 befindet sich in der ersten Nut 51 im Layer L6. Der erste Pin 31 ist gleichzeitig auch ein siebter Endpin 31. Dieser Endpin 31 weist einen Eingang 105 zum Anschluss einer Energiequelle, beispielsweise eines Inverters, auf. Der siebte Endpin 31 ist daher nur mit einem weiteren Pin, also einem neunten Pin 39, verbunden. Der siebte Endpin 31 kann somit als sogenannter Einzelpin oder Ipin ausgestaltete sein. Der erste Pin 31, bzw. siebte Endpin, ist mittels der ersten Verbindungsart 61, als durchgezogene Linie dargestellt, mit einem neunten Pin 39 in einer Nut 56 verbunden. Der neunte Pin 39 befindet sich im Layer L5. Zwischen der ersten Nut 51 und der Nut 56 liegt ein erster Abstand 11, der gleichlang wie der erste Abstand 11 aus Figur 2 ist.

Der neunte Pin 39 ist mittels einer sechsten Verbindungsart 66, als gepunktete Linie mit kurzen Abständen dargestellt, mit einem sechsten Pin 36 in einer Nut 55 verbunden. Der sechste Pin 36 liegt in Layer L2. Der sechste Pin 36 ist über eine fünfte Verbindungsart 65, als gepunktete Linie mit langen Abständen dargestellt, mit einem fünften Pin 35 in Nut 54 verbunden. Der fünfte Pin 35 liegt in Layer L1. Der fünfte Pin 35 ist mittels der vierten Verbindungsart 64, als gestrichelte Linie mit langen Abständen dargestellt, mit einem vierten Pin 34 in der Nut 55 verbunden.

Der vierte Pin 34 ist über die dritte Verbindungsart 63, als gepunktete Linie mit sehr kurzen Abständen dargestellt, mit einem dritten Pin 33 verbunden. Der dritte Pin 33 liegt in der Nut 54. Der dritte Pin 33 liegt im Layer L4. Der dritte Pin 33 ist über die zweiten Verbindungsart 62, als gestrichelte Linie dargestellt, mit einem zweiten Pin 32 in der Nut 55 verbunden. Der zweite Pin 32 liegt im Layer L6. Der zweite Pin 32 liegt in der Nut 55, also derselben Nut wie der vierte Pin 34 und sechste Pin 36. Der zweite Pin 32 liegt im Layer L6. Zwischen dem zweiten Pin 32 und dem vierten Pin 34 ist somit noch Platz in der Nut 55 für zwei weitere Pins in den Layer L4 und L5. Außerdem ist in der Nut 55 noch Platz für einen weiteren Pin in Layer L1.

Der zweite Pin 32 ist über die erste Verbindungsart 61, als durchgezogene Linie dargestellt, mit einem siebten Pin 37 in der Nut 54 verbunden. Der siebte Pin 37 liegt im Layer L5. Der siebte Pin 37 befindet sich in der Nut 54, also in derselben Nut wie der dritte Pin 33 und fünfte Pin 35. Zwischen dem fünften Pin 35 und dem dritten Pin 33 in der Nut 54 ist noch Platz für zwei weitere Pins in Layer L2 und L3. Außerdem ist in der Nut 54 noch Platz für einen weiteren Pin in Layer L6.

Die Verbindung des zweiten, dritten, vierten, fünften, sechsten und siebten Pins 32 - 37 bildet eine vierte Windung 44.

Der siebte Pin 37 ist über die sechste Verbindungsart 66, als gepunktete Linie mit kurzen Abständen dargestellt, mit einem zehnten Pin 36(2) verbunden. Der zehnte Pin 36(2) liegt in der dritten Nut 53 im Layer L2. Mit dem zehnten Pin 36(2) beginnt die vorher beschriebene serielle Verbindung der im Stator nachfolgenden Pins erneut, wobei der zehnte Pin 36(2) ähnlich zum sechsten Pin 36 mit einem Versatz der Nut um 120 Grad ist.

Die serielle Verbindung des zehnten Pins 36(2) mit weiteren Pins in der zweiten Nut 52 bildet eine fünfte Windung 45. Die erste, zweite, dritte, vierte und fünfte Verbindungsart 61 - 65 zwischen diesen Pins ist identisch zu der jeweiligen ersten, zweiten, dritten, vierten und fünften Verbindungsart 61 - 65 der Pins der ersten bis vierten Windung 41 - 44.

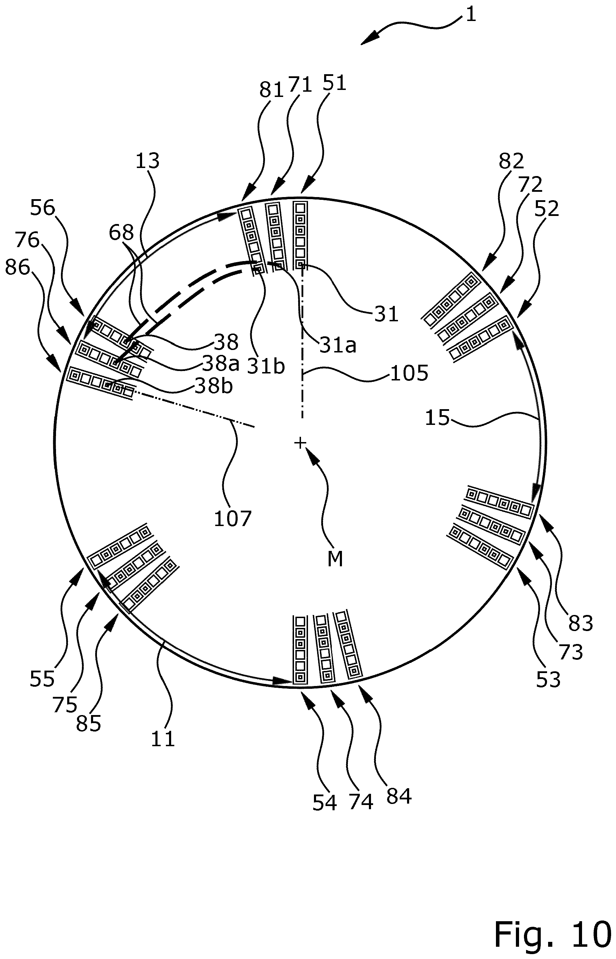

Die beiden Windungen 44, 45 sind durch die sechste Verbindungsart 66 verbunden. Durch die Fortsetzung der seriellen Verbindung wird die sechste Windung 46 in zwei weiteren Nuten 51 und 56 vervollständigt. Die Windungen 44 - 46 sind jeweils mit der sechsten Verbindungsart 66 verbunden. Die sechste Verbindungsart 66 zwischen den jeweiligen Windungen ist somit identisch. Auch die erste, dritte, vierte und fünfte Verbindungsart 61, 63 - 65 zwischen den Pins der sechsten Windung 46 ist identisch zu der ersten, dritten, vierten und fünften Verbindungsart 61, 63 - 65 der vorherigen Windungen 41 - 45. Die sechste Windung 46 wird durch eine Verbindung einer achten Verbindungsart 68 vervollständigt. Diese Verbindung ist in Figur 10 gezeigt und wird im Zusammenhand mit dieser Figur beschrieben.

Die vier Windungen 45 - 48 bilden durch einen Umlauf um den Stator 1 entgegen dem Uhrzeigersinn eine erste Teilspule. Die erste Teilspule der zweiten Spule 202 endet mit einem achten Endpin 38.

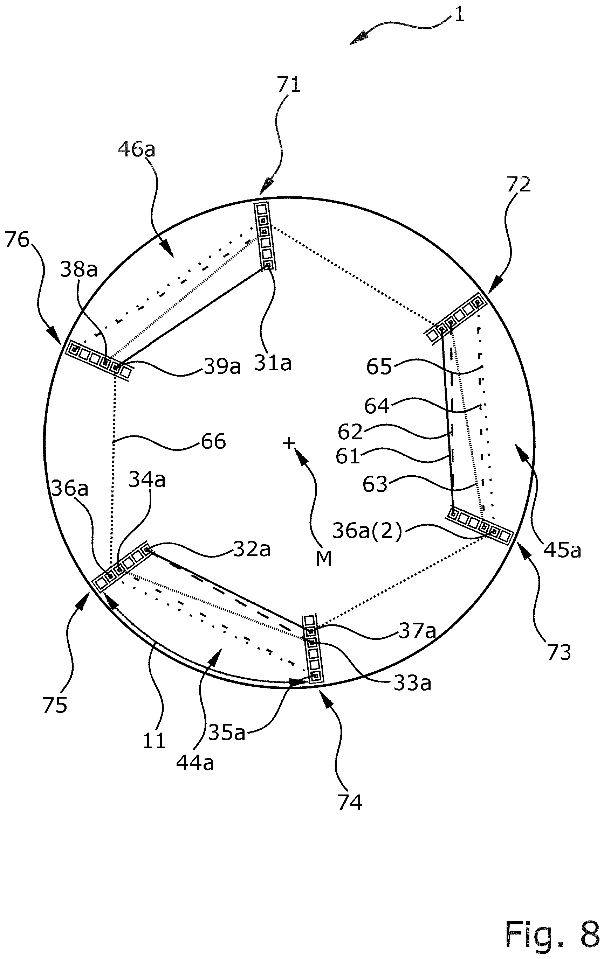

Figur 8 zeigt den Stator 1 aus Figur 7, wobei dort sechs weitere Nuten 71 - 76 gezeigt sind, die sich in direkter Nachbarschaft zu den Nuten 51 - 56 aus Figur 7 befinden. Der Abstand 11 weist die gleiche Länge wie in den vorherigen Figuren auf.

Die Pins 31a - 39a sind in gleicher Weise wie die Pins 31 - 39 der Figur 7 verbunden. Selbst die Verbindungsart ist identisch zu den vorherigen Figuren und durch gleiche Bezugszeichen deutlich gemacht. In gleicher Weise wie bei Figur 7 beschrieben, werden die Windungen 44a, 45a, 46a gebildet und sind mit dem Uhrzeigersinn miteinander durch die sechste Verbindungsart 66 verbunden.

Die drei Windungen 44a, 45a, 46a bilden durch einen Umlauf um den Stator 1 entgegen dem Uhrzeigersinn eine zweite Teilspule. Die Teilspule beginnt mit einem Pin 31a, der ein neunter Endpin ist. Der neunte Endpin 31a weist im Gegensatz zum siebten Endpin 31 jedoch Verbindungen zu zwei weiteren Pins auf, wie in Verbindung mit Figur 10 erläutert. Die Teilspule endet mit dem Pin 38a der Windung 46a. Der Pin 38a der Windung 46a stellt somit einen zehnten Endpin 38a dar. Ferner weist die Windung 46a zwei Endpins 31a, 38a auf.

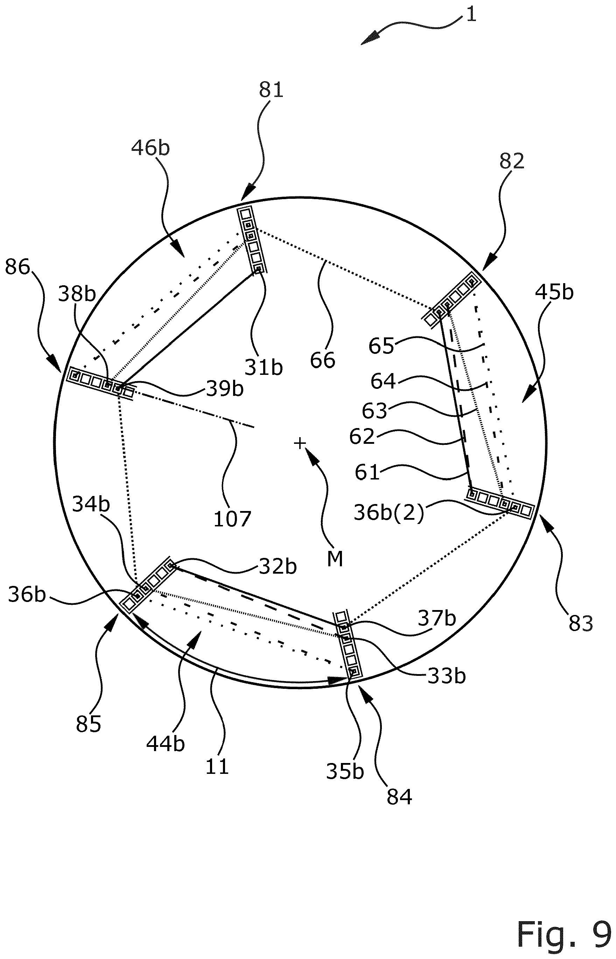

Figur 9 zeigt den Stator 1 aus Figur 7 und 8, wobei dort sechs weitere Nuten 81 - 86 gezeigt sind, die sich in direkter Nachbarschaft zu den Nuten 71 - 76 aus Figur 8 befinden. Der Abstand 11 weist die gleiche Längen wie in den vorherigen Figuren auf.

Die Pins 31b - 39b sind in gleicher Weise wie die Pins 31 - 39 der Figur 7 und die Pins 31a - 39a der Figur 8 verbunden. Selbst die Verbindungsart ist identisch zu den vorherigen Figuren und durch gleiche Bezugszeichen deutlich gemacht. In gleicher Weise wie bei Figur 7 und 8 beschrieben, werden die Windungen 44b, 45b, 46b gebildet und sind entgegen dem Uhrzeigersinn miteinander durch die sechste Verbindungsart 66 verbunden.

Die drei Windungen 44b, 45b, 46b bilden durch einen Umlauf um den Stator 1 eine dritte Teilspule. Die Teilspule beginnt mit einem Pin 31b, der ein elfter Endpin ist. Der elfte Endpin 31b weist im Gegensatz zum siebten Endpin 31 jedoch Verbindungen zu zwei weiteren Pins auf, wie in Verbindung mit Figur 10 erläutert. Die Teilspule endet mit dem Pin 38b der Windung 46b. Der Pin 38b der Windung 46b stellt somit einen zwölften Endpin dar. Der zwölfte Endpin 38b wiederum ist ähnlich zum siebten Endpin ausgebildet, also beispielsweise als Einzelpin oder Ipin, und weist einen Ausgang 107 zum Anschluss einer Energiequelle auf.

Figur 10 zeigt eine Pinbelegung durch die erste, zweite und dritte Teilspule der zweiten Spule 202 aus Figur 7, 8 und 9, welche durch schwarze Vierecke auf weißem Grund dargestellt sind. Gleiche Bezugszeichen bezeichnen gleiche Pins, Nuten, Verbindungen in den Figuren.

Der achte Endpin 38 der Windung 46 der ersten Teilspule in Nut 56, Layer L3, und der neunte Endpin 31a der Windung 46a der zweiten Teilspule in Nut 71, Layer L1, ist mit einer achten Verbindungsart 68 verbunden. Die achte Verbindungsart überwindet einen zweiten Abstand 13, der eine Nut kürzer als der erste Abstand ist. Der zehnte Endpin 38a der Windung 46a der zweiten Teilspule in Nut 76, Layer L3 und der elfte Endpin 31b der Windung 46b der dritten Teilspule in Nut 81, Layer L1 ist mit der achten Verbindungsart 68 verbunden.

Somit verbindet die achte Verbindungsart 68 jeweils zwei Teilspulen, wobei drei Teilspulen die zweite Spule 202 mit einem Eingang 105 und einem Ausgang 107 nach dreimaligem radialen Umlauf um den Stator entgegen dem Uhrzeigersinn bilden. Ein in der Figur dargestellter dritter Abstand 15 ist zwei Nuten kürzer als der erste Abstand 11 aus der vorherigen Figur. Die Blöcke der drei benachbarten Nuten, die mit Pins der Spule belegt sind, weisen jeweils den dritten Abstand 15 voneinander auf.

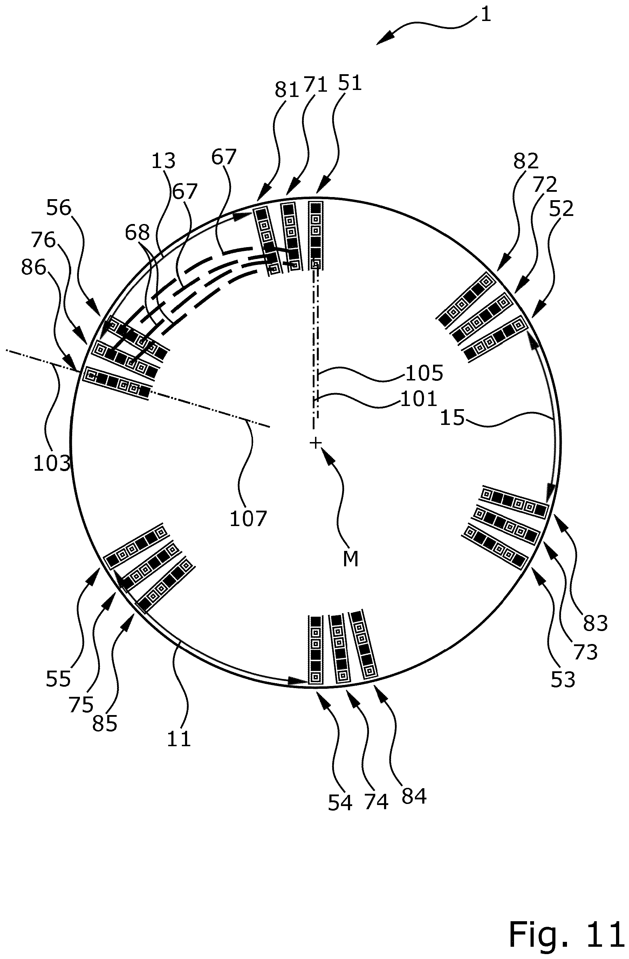

Figur 11 zeigt die erste Spule 201 und die zweite Spule 202 aus den vorherigen Figuren in einem Stator 1. Gleiche Bezugszeichen aus den vorherigen Figuren bezeichnen gleiche Pins, Nuten und Verbindungsarten.

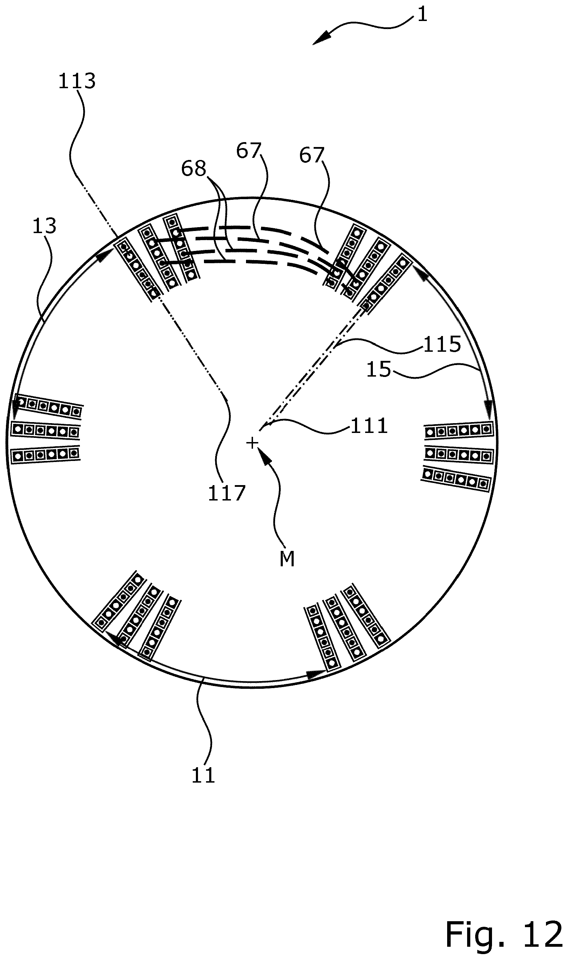

Figur 12 zeigt zwei weitere Spulen, die jeweils durch Pins mit einem schwarzen Punkt bzw. mit einem weißen Punkt, gebildet werden. Die drei Teilspulen der Spule mit den Pins mit weißen Punkt werden gemäß der Beschreibung der Figuren 3 - 6 gebildet, wobei die Nuten um 20 Grad mit dem Uhrzeigersinn versetzt sind. Die drei Teilspulen der Spule mit den Pins mit schwarzen Punkt werden gemäß der Figuren 7 - 10 gebildet, wobei die Nuten um 20 Grad mit dem Uhrzeigersinn verdreht sind.

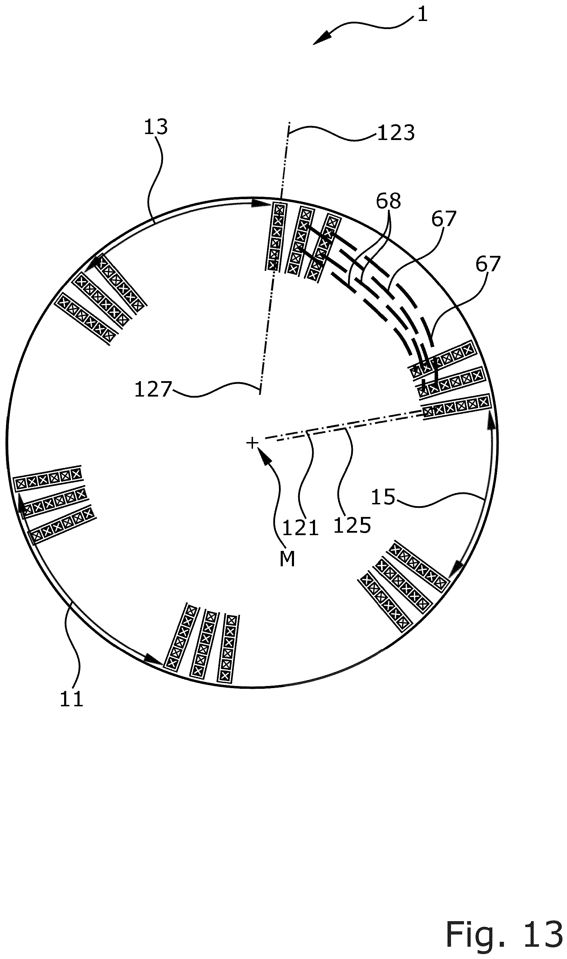

Figur 13 zeigt zwei weitere Spulen, wie jeweils durch Pins mit einem schwarzen Kreuz bzw. mit einem weißen Kreuz, gebildet werden. Die drei Teilspulen der Spule mit den Pins mit weißen Kreuz werden gemäß der Beschreibung der Figuren 3 - 6 gebildet, wobei die Nuten um 40 Grad mit dem Uhrzeigersinn versetzt sind. Die drei Teilspulen der Spule mit den Pins mit schwarzen Kreuz werden gemäß der Figuren 7 - 10 gebildet, wobei die Nuten um 40 Grad mit dem Uhrzeigersinn versetzt sind.

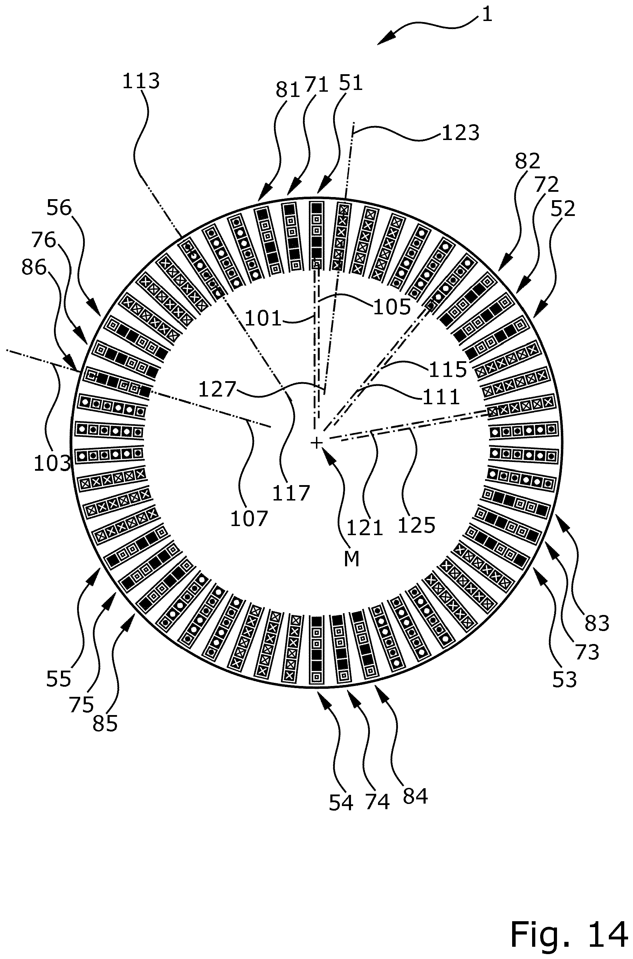

Figur 14 zeigt eine Pinbelegung durch die sechs Spulen als eine Kombination aus den Figuren 11, 12 und 13. Insbesondere aus der Lage der Ein- 101, 105, 111, 115, 121, 125 und Ausgänge 103, 107, 113, 117, 123, 127 wird ersichtlich, dass eine Verschaltung der Spulen innerhalb von vierundzwanzig Nuten erfolgen kann. Bei dem exemplarisch dargestellten Stator mit vierundfünfzig Nuten ist eine Verschaltung der Ein- und Ausgänge somit innerhalb von fast einer Hälft des Statorumfangs möglich. Rein bezogen auf die Ein- oder Ausgänge, wäre eine getrennte Beschaltung innerhalb von dreizehn Nuten möglich.

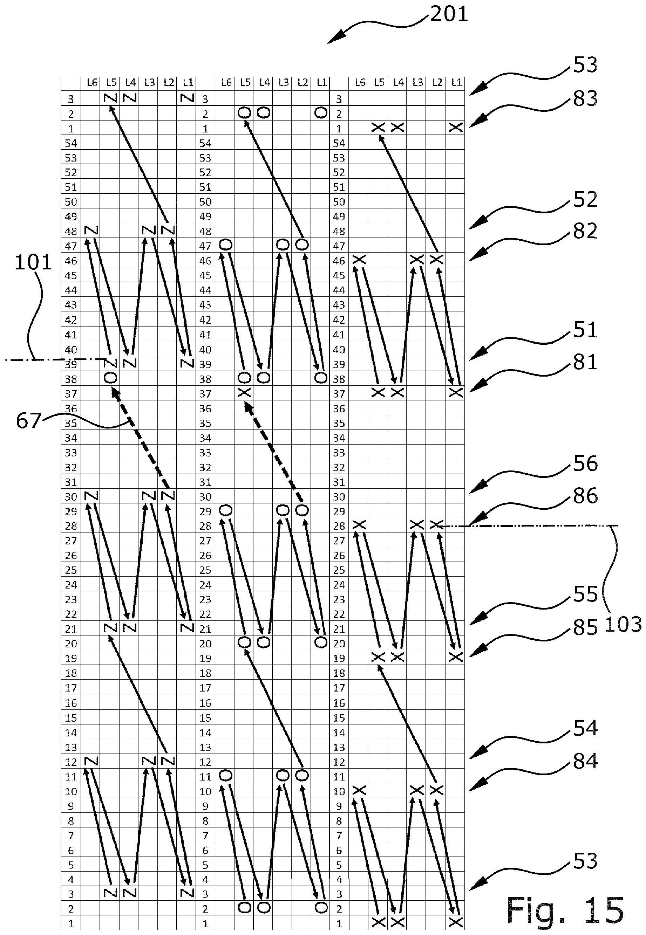

Figur 15 zeigt das Wickelschema der drei Teilspulen der ersten Spule 201. Die fortlaufende "Nutennummer" ist kein Bezugszeichen. Die Bezugszeichen mit Pfeil an den Nuten sind identisch zu den vorherigen Figuren und ermöglichen einen Vergleich mit diesen Figuren.

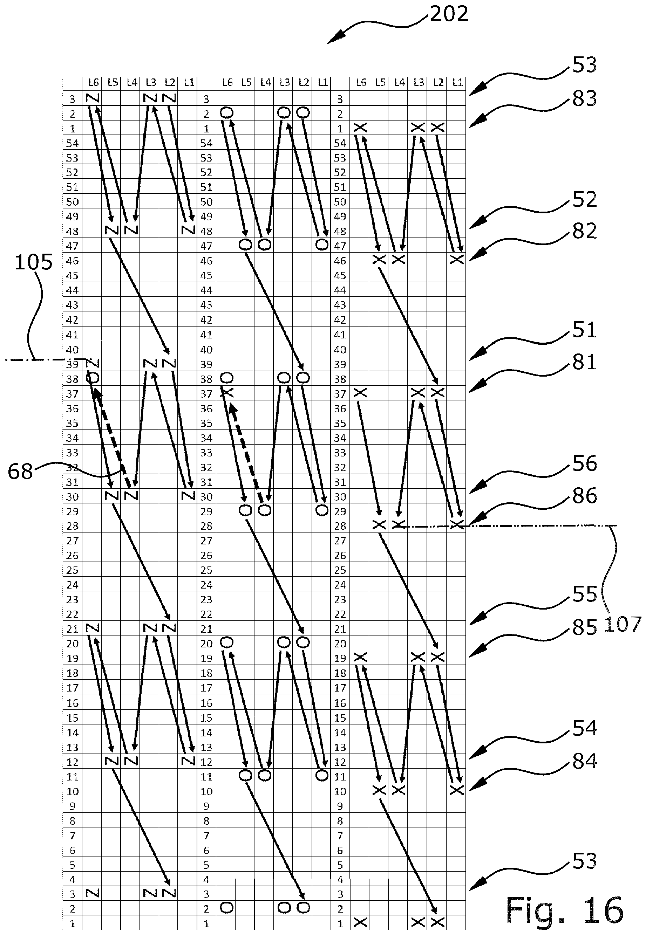

Figur 16 zeigt das Wickelschema der drei Teilspulen der zweiten Spule 202. Die fortlaufende "Nutennummer" ist kein Bezugszeichen. Die Bezugszeichen mit Pfeil an den Nuten sind identisch zu den vorherigen Figuren und ermöglichen einen Vergleich mit diesen Figuren.

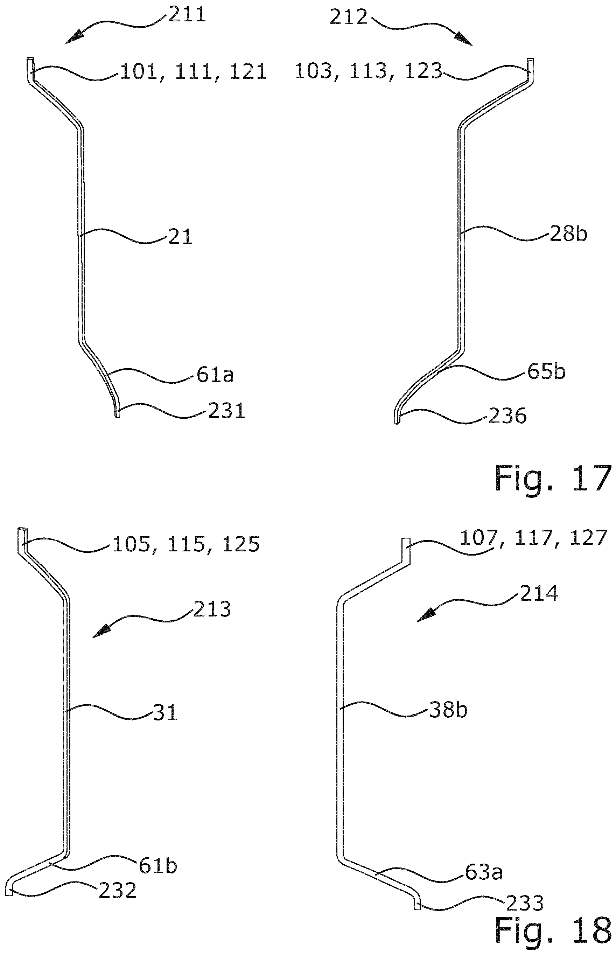

Figur 17 zeigt links einen ersten Einzelpin 211 oder auch Ipin genannt. In der Mitte befindet sich der erste Endpin 21, der beispielsweise in der ersten Nut 51, Layer L5, des Stators angeordnet ist. Die Bezugszeichen sind identisch zu den vorhergehenden Figuren. Der erste Einzelpin 211 ist aus Sicht des Statormittelpunkts mit der ersten Stirnseite 7 nach oben dargestellt. Am unteren Ende weist der erste Einzelpin 211 einen Pinfuß 61a mit einem ersten Schweißpunkt 231 auf. Am oberen Ende befindet sich der Eingang 101, 111, 121.

Rechts in Figur 17 ist ein zweiter Einzelpin 212 gezeigt. In der Mitte befindet sich der sechste Endpin 28b, der beispielsweise in der Nut 86, Layer L2, des Stators angeordnet ist. Die Bezugszeichen sind identisch zu den vorhergehenden Figuren. Die Pins sind aus Sicht des Statormittelpunkts mit der ersten Stirnseite 7 nach oben dargestellt. Am unteren Ende weist der zweite Einzelpin 212 einen Pinfuß 65b mit einem sechsten Schweißpunkt 236 auf. Am oberen Ende befindet sich der Ausgang 103, 113, 123.

Figur 18 zeigt links einen dritten Einzelpin 213 oder auch Ipin genannt. In der Mitte befindet sich der siebte Endpin 31, der beispielsweise in der ersten Nut 51, Layer L6, des Stators angeordnet ist. Die Bezugszeichen sind identisch zu den vorhergehenden Figuren. Der Einzelpin 213 ist aus Sicht des Statormittelpunkts mit der ersten Stirnseite 7 nach oben dargestellt. Am unteren Ende weist der dritte Einzelpin 213 einen Pinfuß 61b mit einem zweiten Schweißpunkt 232 auf. Am oberen Ende befindet sich der Eingang 105, 115, 125.

Rechts in Figur 18 ist ein vierter Einzelpin 214 gezeigt. In der Mitte befindet sich der zwölfte Endpin 38b, der beispielsweise in der Nut 86, Layer L4, des Stators angeordnet ist. Die Bezugszeichen sind identisch zu den vorhergehenden Figuren. Die Pins sind aus Sicht des Statormittelpunkts mit der ersten Stirnseite 7 nach oben dargestellt. Am unteren Ende weist der vierte Einzelpin 214 einen Pinfuß 63a mit einem dritten Schweißpunkt 233 auf. Am oberen Ende befindet sich der Ausgang 107, 117, 127.

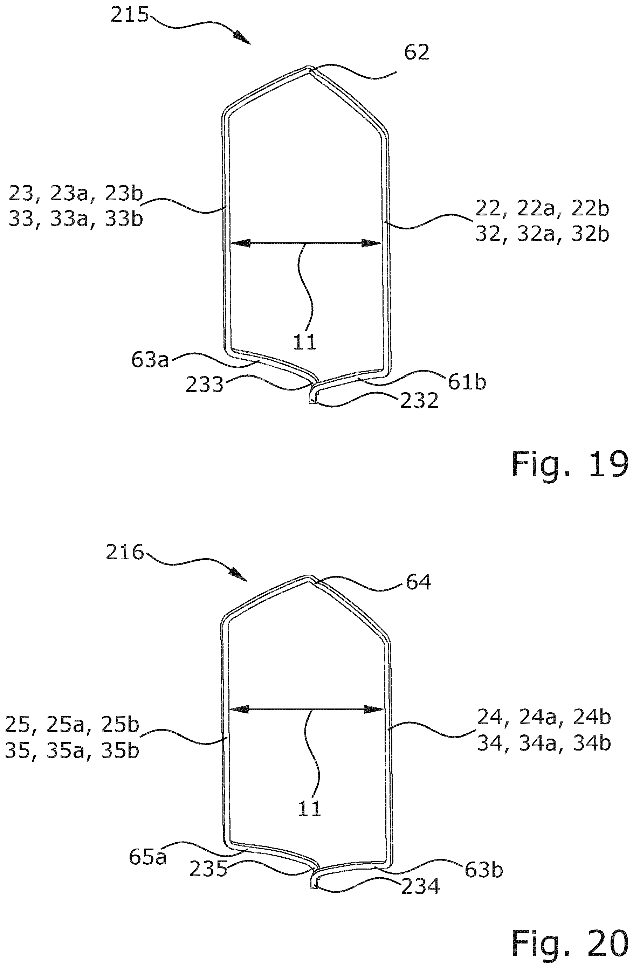

Figur 19 zeigt einen ersten Doppelpin 215 oder Upin, der die zweite Verbindungsart 62 zwischen einem zweiten Pin 22, 22a, 22b, 32, 32a, 32b und einem dritten Pin 23, 23a, 23b, 33, 33a, 33b herstellt. Der Doppelpin 215 kann den ersten Abstand 11 zwischen den Nuten überbrücken. Am unteren Ende weist der Doppelpin zwei nach innen gebogene Pinfüße 63a, 61b mit einem dritten Schweißpunkt 233 und einem zweiten Schweißpunkt 232 auf.

Figur 20 zeigt einen zweiten Doppelpin 216 oder Upin, der die vierte Verbindungsart 64 zwischen einem fünften Pin 25, 25a, 25b, 35, 35a, 35b und einem vierten Pin 24, 24a, 24b 34, 34a, 34b herstellt. Der Doppelpin 216 kann den ersten Abstand 11 zwischen den Nuten überbrücken. Am unteren Ende weist der Doppelpin zwei nach innen gebogene Pinfüße 65a, 63b mit einem fünften Schweißpunkt 235 und einem vierten Schweißpunkt 234 auf.

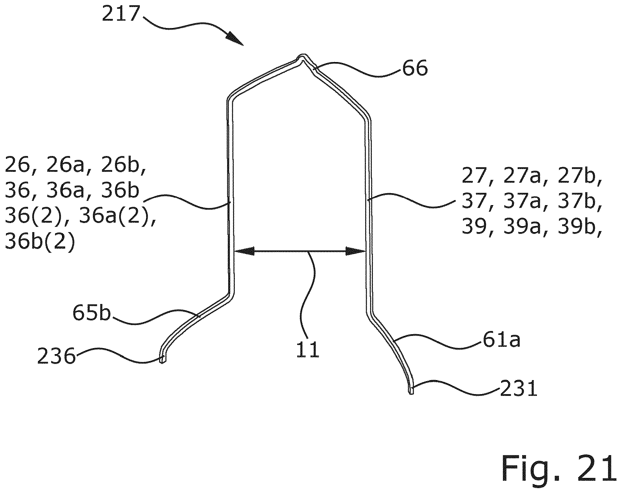

Figur 21 zeigt einen dritten Doppelpin 217 oder Upin, der die sechste Verbindungsart 66 zwischen einem sechsten Pin 26, 26a, 26b, 36, 36a, 36b, 36(2), 36a(2), 36b(2) und einem siebten oder neunten Pin 27, 27a, 27b, 37, 37a, 37b, 39, 39a, 39b herstellt. Der dritte Doppelpin 217 kann den ersten Abstand 11 zwischen den Nuten überbrücken. Am unteren Ende weist der Doppelpin zwei nach außen gebogene Pinfüße 65b, 61a mit einem sechsten Schweißpunkt 236 und einem ersten Schweißpunkt 231 auf.

Der erste Abstand 11 ist lediglich in Bezug auf die zu überbrückende Nutenanzahl identisch. Der tatsächlich zu überbrückende räumliche Abstand unterscheidet sich, weil die Doppelpins unterschiedliche Layer verbinden.

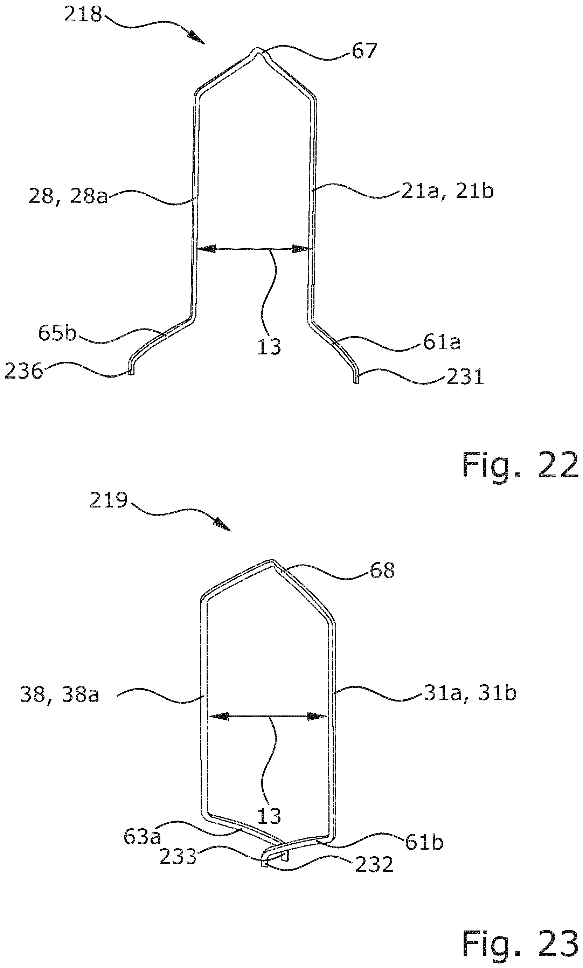

Figur 22 zeigt einen vierten Doppelpin 218 oder Upin, der die siebte Verbindungsart 67 zwischen einem zweiten oder vierten Endpin 28, 28a und einem dritten oder fünften Endpin 21a, 21b herstellt. Der vierte Doppelpin 218 kann den zweiten Abstand 13 also um eine Nut weniger, als der erste Abstand 11 beträgt, überbrücken. Am unteren Ende weist der vierte Doppelpin 218 zwei nach außen gebogene Pinfüße 65b, 61a mit einem sechsten Schweißpunkt 236 und einem ersten Schweißpunkt 231 auf.

Figur 23 zeigt einen fünften Doppelpin 219 oder Upin, der die achte Verbindungsart 68 zwischen einem achten oder zehnten Endpin 38, 38a und einem neunten oder elften Endpin 31a, 31b herstellt. Der fünfte Doppelpin 219 kann den zweiten Abstand 13 also um eine Nut weniger, als der erste Abstand 11 beträgt, überbrücken. Am unteren Ende weist der fünfte Doppelpin 219 zwei nach innen gebogene Pinfüße 63a, 61b mit einem dritten Schweißpunkt 233 und einem zweiten Schweißpunkt 232 auf.

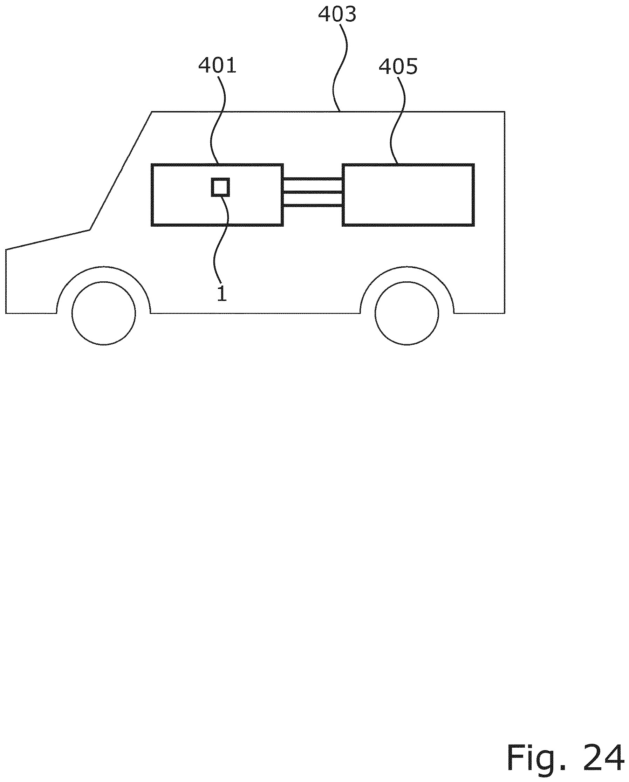

Die verschiedenen Einzel- und Doppelpins in den Figuren 17 bis 23 weisen ähnliche Pinfüße auf. Die erste Verbindungsart 61 wird durch Verschweißen des ersten Schweißpunktes 231 am Pinfuß 61a mit dem zweiten Schweißpunkt 232 am Pinfuß 61b gemäß Wickelschema gebildet. Die dritte Verbindungsart 63 wird durch Verschweißen des dritten Schweißpunktes 233 am Pinfuß 63a mit dem vierten Schweißpunkt 234 am Pinfuß 63b gemäß Wickelschema gebildet. Die fünfte Verbindungsart 65 wird durch Verschweißen des fünften Schweißpunktes 235 am Pinfuß 65a mit dem sechsten Schweißpunkt 236 am Pinfuß 65b gemäß Wickelschema gebildet. Über die jeweilige Verbindungsart werden auch die Einzelpins mit den Doppelpins verbunden, sodass die Pins als durchgehender elektrischer Leiter den Stator umlaufen. Figur 24 ist eine Prinzipskizze eines Ausführungsbeispiels eines Fahrzeugs 403, beispielsweise eines Hybridfahrzeugs oder eines Elektrofahrzeugs, umfassend eine elektrische Maschine 401, insbesondere einen Elektromotor, mit einem Ausführungsbeispiel des Stators 1 zum Antreiben des Fahrzeugs 403. Ferner kann das Fahrzeug 403 einen Inverter 405 aufweisen, der die elektrische Maschine 401 mit einem Wechselstrom aus einer Gleichstromquelle versorgt.

### Bezugszeichenliste

- 1: Stator
- 2, 3, 21-38b: Pin
- 5, 51 - 58, 71 - 78: Nut
- 81 - 88, 91 - 96: Nut
- 7: erste Stirnseite
- 9: zweite Stirnseite
- 11: erster Abstand
- 13: zweiter Abstand
- 15: dritter Abstand
- 21: erster Endpin
- 28: zweiter Endpin
- 21a: dritter Endpin
- 28a: vierter Endpin
- 21b: fünfter Endpin
- 28b: sechster Endpin
- 31: siebter Endpin
- 38: achter Endpin
- 31a: neunter Endpin
- 38a: zehnter Endpin
- 31b: elfter Endpin
- 38b: zwölfter Endpin
- 41 - 46, 41a - 46a, 41b - 46b: Windung
- 61: erste Verbindungsart
- 62: zweite Verbindungsart
- 63: dritte Verbindungsart
- 64: vierte Verbindungsart
- 65: fünfte Verbindungsart
- 66: sechste Verbindungsart
- 67: siebte Verbindungsart
- 68: achte Verbindungsart
- 61a, b, 63a, b, 65a, b: Pinfüße
- 101, 105, 111, 115, 121, 125: Eingang
- 103, 107, 113, 117, 123, 127: Ausgang
- 211: erster Einzelpin
- 212: zweiter Einzelpin
- 213: dritter Einzelpin
- 214: vierter Einzelpin
- 215: erster Doppelpin
- 216: zweiter Doppelpin
- 217: dritter Doppelpin
- 218: vierter Doppelpin
- 219: fünfter Doppelpin
- 231: erster Schweißpunkt
- 232: zweiter Schweißpunkt
- 233: dritter Schweißpunkt
- 234: vierter Schweißpunkt
- 235: fünfter Schweißpunkt
- 236: sechster Schweißpunkt
- 201: erste Spule
- 202: zweite Spule
- 401: elektrische Maschine
- 403: Fahrzeug
- 405: Inverter
- L1, L2, L3, L4, L5, L6: Layer
- M: Statormittelpunkt

## Patentansprüche

1. Stator (1) für eine elektrische Maschine (100), umfassend eine erste Stirnseite (7), eine gegenüberliegende zweite Stirnseite (9) und eine Vielzahl von Pins (21 - 26), die auf konzentrischen Kreisen mit unterschiedlichen Abständen zu einem Statormittelpunkt (M) in Nuten (51 - 58, 71 - 78, 81 - 88) im Stator angeordnet sind, wobei jeder konzentrische Kreis einen Layer (L1 - L6) bildet; wobei
- der Stator (1) zumindest zwei Windungen (41 - 43) aufweist, die sich über den gesamten Umfang des Stators (1) erstrecken und dabei eine Teilspule bilden;
- jeweils sechs Pins (21 - 26) in unterschiedlichen Layer (L1 - L6) miteinander seriell verbunden sind und eine der Windungen (41 - 43) bilden;
- sich ein erster Pin (21, 27) der ersten Windung (41) in einer ersten Nut (51, 53, 55) im fünften Layer (L5) befindet;
- sich ein zweiter Pin (22) der ersten Windung (41) in einer zweiten Nut (52, 54, 56) im sechsten Layer (L6) befindet und mit dem ersten Pin (21) auf der zweiten Stirnseite (9) mittels einer ersten Verbindungsart (61) verbunden ist, wobei die zweite Nut (52, 54, 56) einen ersten radialen Abstand (11) in einer ersten Umfangsrichtung des Stators (1) zu der ersten Nut (51, 53, 55) aufweist;
- sich ein dritter Pin (23) der ersten Windung (41) in der ersten Nut (51, 53, 55) im vierten Layer (L4) befindet und mit dem zweiten Pin (22) auf der ersten Stirnseite (7) mittels einer zweiten Verbindungsart (62) verbunden ist;
- sich ein vierter Pin (24) der ersten Windung (41) in der zweiten Nut (52, 54, 56) im dritten Layer (L3) befindet und mit dem dritten Pin (23) auf der zweiten Stirnseite mittels einer dritten Verbindungsart (63) verbunden ist;
- sich ein fünfter Pin (25) der ersten Windung (41) in der ersten Nut (51, 53, 55) im ersten Layer (L1) befindet und mit dem vierten Pin (24) auf der ersten Stirnseite (7) mittels einer vierten Verbindungsart (64) verbunden ist;
- sich ein sechster Pin (26) der ersten Windung (41) in der zweiten Nut (52, 54, 56) im zweiten Layer (L2) befindet und mit dem fünften Pin (25) auf der zweiten Stirnseite mittels einer fünften Verbindungsart (65) verbunden ist;
- sich ein siebter Pin (27) der zweiten Windung (42) im fünften Layer (L5) in einer dritten Nut (53) befindet und mittels einer sechsten Verbindungsart (66) mit dem sechsten Pin (26) verbunden ist;
- wobei zwischen der dritten Nut (53) und der zweiten Nut (52, 54, 56) der gleiche erste Abstand (11) wie zwischen der zweiten Nut und der ersten Nut liegt;
- mit dem siebten Pin (27) die serielle Verbindung der im Stator (1) nachfolgenden Pins erneut beginnt;
- sich die erste, zweite, dritte, vierte, fünfte und sechste Verbindungsart (61, 62, 63, 64, 65, 66) voneinander unterscheiden.

2. Stator (1) gemäß Anspruch 1, wobei drei Teilspulen vorgesehen sind, die mittels einer siebten Verbindungsart (67) oder einer achten Verbindungsart (68) miteinander verbunden sind und eine Spule (201, 202) bilden.

3. Stator (1) gemäß Anspruch 2, wobei der Stator drei Phasen aufweist, wobei jeweils zwei Spulen (201, 202) derart einer der drei Phasen zugeordnet sind, dass sich jeweils die Pins (21 - 38b) von zwei Spulen, die einer gleichen Phase zugeordnet sind, in drei benachbarten Nuten (51 - 56, 71 - 76, 81 - 86,) befinden.

4. Stator (1) gemäß Anspruch3, wobei je ein Eingang (101, 105, 111, 115, 121, 125) eines Endpins (21, 31) von zwei Spulen (201, 202) mittels einer neunten Verbindungsart miteinander verbunden ist.

5. Stator (1) gemäß Anspruch 4, wobei je ein Ausgang (103, 107, 113, 117, 123, 127) eines Endpins (28b, 38b) der zwei Spulen (201, 202) miteinander verbunden ist und die zwei Spulen (201, 202) dadurch parallelgeschaltet sind.

6. Stator (1) gemäß einem der vorherigen Ansprüche, wobei die zweite Verbindungsart (62) einen ersten Doppelpin (215) umfasst, der aus dem zweiten Pin (22, 22a, 22b, 32, 32a, 32b) und dem dritten Pin (23, 23a, 23b, 33, 33a, 33b) gebildet wird, wobei der erste Doppelpin (215) zwei nach innen gebogene Pinfüße (61b, 63a) mit je einem Schweißpunkt (233, 232) aufweist und den ersten radialen Abstand (11) überbrückt.

7. Stator (1) gemäß einem der vorherigen Ansprüche, wobei die vierte Verbindungsart (64) einen zweiten Doppelpin (216) umfasst, der aus dem vierten Pin (24, 24a, 24b, 34, 34a, 34b) und dem fünften Pin (25, 25a, 25b, 35, 35a, 35b) gebildet wird, wobei der zweite Doppelpin (216) zwei nach innen gebogene Pinfüße (63b, 65b) mit je einem Schweißpunkt (235, 234) aufweist und den ersten radialen Abstand (11) überbrückt.

8. Stator (1) gemäß einem der vorherigen Ansprüche, wobei die sechste Verbindungsart (66) einen dritten Doppelpin (217) umfasst, der aus dem sechsten Pin (26, 26a, 26b, 36, 36a, 36b, 36(2), 36a(2), 36b(2)) und dem siebten oder neunten Pin (27, 27a, 27b, 37, 37a, 37b, 39, 39a, 39b) gebildet wird, wobei der dritte Doppelpin (217) zwei nach außen gebogene Pinfüße (61a, 65b) mit je einem Schweißpunkt (236, 231) aufweist und den ersten radialen Abstand (11) überbrückt.

9. Stator (1) gemäß einem der vorherigen Ansprüche, wobei die siebte Verbindungsart (67) einen vierten Doppelpin (218) umfasst, der aus einem zweiten oder vierten Endpin (28, 28a) und einem dritten oder fünften Endpin (21, 21a) gebildet wird, wobei der vierte Doppelpin (218) zwei nach außen gebogene Pinfüße (65b, 61a) mit je einem Schweißpunkt (236, 231) aufweist und einen zweiten radialen Abstand (13) überbrückt.

10. Stator (1) gemäß einem der vorherigen Ansprüche, wobei die achte Verbindungsart (68) einen fünften Doppelpin (219) umfasst, der aus einem achten oder zehnten Endpin (38, 38a) und einem neunten oder elften Endpin (31a, 31b) gebildet wird, wobei der fünfte Doppelpin (219) zwei nach innen gebogene Pinfüße (63a, 61b) mit je einem Schweißpunkt (233, 232) aufweist und einen zweiten radialen Abstand (13) überbrückt.

11. Stator (1) gemäß einem der vorherigen Ansprüche, wobei ein erster Einzelpin (211) einen ersten Endpin (21) umfasst und einen im Uhrzeigersinn gebogenen Pinfuß (61a) mit einem Schweißpunkt (231) aufweist.

12. Stator (1) gemäß einem der vorherigen Ansprüche, wobei ein zweiter Einzelpin (212) einen sechsten Endpin (28b) umfasst und einen gegen den Uhrzeigersinn gebogenen Pinfuß (65b) mit einem Schweißpunkt (236) aufweist.

13. Stator (1) gemäß einem der vorherigen Ansprüche, wobei ein dritter Einzelpin (213) einen siebten Endpin (31) umfasst und einen gegen den Uhrzeigersinn gebogenen Pinfuß (61b) mit einem Schweißpunkt (232) aufweist.

14. Stator (1) gemäß einem der vorherigen Ansprüche, wobei ein vierter Einzelpin (214) einen zwölften Endpin (38b) umfasst und einen im Uhrzeigersinn gebogenen Pinfuß (63a) mit einem Schweißpunkt (233) aufweist.

15. Stator (1) gemäß einem der vorherigen Ansprüche, wobei die erste Verbindungsart (61) durch eine Schweißverbindung eines ersten Schweißpunkts (231) am Pinfuß (61a) des dritten Doppelpins (217) oder des vierten Doppelpins (218) oder des ersten Einzelpins (211) mit einem zweiten Schweißpunkt (232) am Pinfuß (61b) des ersten Doppelpins (215) oder des fünften Doppelpins (219) oder des dritten Einzelpins (213) gebildet wird.

16. Stator (1) gemäß einem der vorherigen Ansprüche, wobei die dritte Verbindungsart (63) durch eine Schweißverbindung eines dritten Schweißpunkts (233) am Pinfuß (63a) des ersten Doppelpins (215) oder des fünften Doppelpins (219) mit einem vierten Schweißpunkt (234) am Pinfuß (63b) des zweiten Doppelpins (216) gebildet wird.

17. Stator (1) gemäß einem der vorherigen Ansprüche, wobei die fünfte Verbindungsart (65) durch eine Schweißverbindung eines fünften Schweißpunkts (235) am Pinfuß (65a) des zweiten Doppelpins (216) mit einem sechsten Schweißpunkt (236) am Pinfuß (65b) des dritten Doppelpins (217) oder des vierten Doppelpins (218) oder des zweiten Einzelpins (212) gebildet wird.

18. Fahrzeug (403) mit einer elektrischen Maschine (401) mit einem Stator (1) gemäß einem der vorherigen Ansprüche.

## Claims

1. Stator (1) for an electric machine (100), comprising a first end face (7), an opposite second end face (9), and a plurality of pins (21 - 26) which are disposed on concentric circles having different spacings from a stator centre (M) in slots (51 - 58, 71 - 78, 81 - 88) in the stator, each concentric circle forming a layer (L1
- L6); wherein
- the stator (1) has at least two windings (41 - 43) which extend over the entire circumference of the stator (1) and in the process form a partial coil;
- six pins (21 - 26) in different layers (L1 - L6) are in each case connected to one another in series and form one of the windings (41 - 43);
- a first pin (21, 27) of the first winding (41) is located in a first slot (51, 53, 55) in the fifth layer (L5);
- a second pin (22) of the first winding (41) is located in a second slot (52, 54, 56) in the sixth layer (L6) and is connected to the first pin (21) on the second end face (9) by means of a first connection type (61), wherein the second slot (52, 54, 56) has a first radial spacing (11) from the first slot (51, 53, 55) in a first circumferential direction of the stator (1);
- a third pin (23) of the first winding (41) is located in the first slot (51, 53, 55) in the fourth layer (L4) and is connected to the second pin (22) on the first end face (7) by means of a second connection type (62);
- a fourth pin (24) of the first winding (41) is located in the second slot (52, 54, 56) in the third layer (L3) and is connected to the third pin (23) on the second end face by means of a third connection type (63);
- a fifth pin (25) of the first winding (41) is located in the first slot (51, 53, 55) in the first layer (L1) and is connected to the fourth pin (24) on the first end face (7) by means of a fourth connection type (64);
- a sixth pin (26) of the first winding (41) is located in the second slot (52, 54, 56) in the second layer (L2) and is connected to the fifth pin (25) on the second end face by means of a fifth connection type (65);
- a seventh pin (27) of the second winding (42) is located in the fifth layer (L5) in a third slot (53) and is connected to the sixth pin (26) by means of a sixth connection type (66);
- wherein the first spacing (11) between the third slot (53) and the second slot (52, 54, 56) is the same as between the second slot and the first slot;
- the serial connection of the pins following in the stator (1) begins again with the seventh pin (27);
- the first, second, third, fourth, fifth and sixth types of connection (61, 62, 63, 64, 65, 66) are different from one another.

2. Stator (1) according to Claim 1, wherein provided are three partial coils which are connected to one another by means of a seventh connection type (67) or an eighth connection type (68) and form a coil (201, 202).

3. Stator (1) according to Claim 2, wherein the stator has three phases, wherein two coils (201, 202) are in each case assigned to one of the three phases in such a manner that the pins (21 - 38b) of two coils assigned to the same phase are located in three adjacent slots (51 - 56, 71 - 76, 81 - 86).

4. Stator (1) according to Claim 3, wherein one input (101, 105, 111, 115, 121, 125) of an end pin (21, 31) of two coils (201, 202) is in each case connected to one another by means of a ninth connection type.

5. Stator (1) according to Claim 4, wherein one output (103, 107, 113, 117, 123, 127) of an end pin (28b, 38b) of the two coils (201, 202) is in each case connected to one another, and the two coils (201, 202) as a result are connected in parallel.

6. Stator (1) according to one of the preceding claims, wherein the second connection type (62) comprises a first double pin (215) which is formed from the second pin (22, 22a, 22b, 32, 32a, 32b) and the third pin (23, 23a, 23b, 33, 33a, 33b), wherein the first double pin (215) has two inwardly bent pin feet (61b, 63a), which have in each case one weld point (233, 232), and bridges the first radial spacing (11).

7. Stator (1) according to one of the preceding claims, wherein the fourth connection type (64) comprises a second double pin (216), which is formed from the fourth pin (24, 24a, 24b, 34, 34a, 34b) and the fifth pin (25, 25a, 25b, 35, 35a, 35b), wherein the second double pin (216) has two inwardly bent pin feet (63b, 65b) which have in each case one weld point(235, 234), and bridges the first radial spacing (11).

8. Stator (1) according to one of the preceding claims, wherein the sixth connection type (66) comprises a third double pin (217), which is formed from the sixth pin (26, 26a, 26b, 36, 36a, 36b, 36(2), 36a(2), 36b(2)) and the seventh or ninth pin (27, 27a, 27b, 37, 37a, 37b, 39, 39a, 39b), wherein the third double pin (217) has two outwardly bent pin feet (61a, 65b), which have in each case one weld point (236, 231), and bridges the first radial spacing (11).

9. Stator (1) according to one of the preceding claims, wherein the seventh connection type (67) comprises a fourth double pin (218), which is formed from a second or fourth end pin (28, 28a) and a third or fifth end pin (21, 21a), wherein the fourth double pin (218) has two outwardly bent pin feet (65b, 61a), which have in each case one weld point (236, 231), and bridges a second radial spacing (13).

10. Stator (1) according to one of the preceding claims, wherein the eighth connection type (68) comprises a fifth double pin (219), which is formed from an eighth or tenth end pin (38, 38a) and a ninth or eleventh end pin (31a, 31b), wherein the fifth double pin (219) has two inwardly bent pin feet (63a, 61b), which have in each case one weld point (233, 232), and bridges a second radial spacing (13).

11. Stator (1) according to one of the preceding claims, wherein a first single pin (211) comprises a first end pin (21) and has a pin foot (61a) which is bent clockwise and has a weld point (231).

12. Stator (1) according to one of the preceding claims, wherein a second single pin (212) comprises a sixth end pin (28b) and has a pin foot (65b) which is bent anticlockwise and has a weld point (236).

13. Stator (1) according to one of the preceding claims, wherein a third single pin (213) comprises a seventh end pin (31) and has a pin foot (61b) which is bent anticlockwise and has a weld point (232).

14. Stator (1) according to one of the preceding claims, wherein a fourth single pin (214) comprises an twelfth end pin (38b) and has a pin foot (63a) which is bent clockwise and has a weld point (233).

15. Stator (1) according to one of the preceding claims, wherein the first connection type (61) is formed by a welded connection between a first weld point (231) at the pin foot (61a) of the third double pin (217), or of the fourth double pin (218) or of the first single pin (211), and a second weld point (232) at the pin foot (61b) of the first double pin (215), or of the fifth double pin (219) or of the third single pin (213).

16. Stator (1) according to one of the preceding claims, wherein the third connection type (63) is formed by a welded connection between a third weld point (233) at the pin foot (63a) of the first double pin (215) or of the fifth double pin (219), and a fourth weld point (234) at the pin foot (63b) of the second double pin (216).

17. Stator (1) according to one of the preceding claims, wherein the fifth connection type (65) is formed by a welded connection between a fifth weld point (235) at the pin foot (65a) of the second double pin (216) and a sixth weld point (236) at the pin foot (65b) of the third double pin (217), or of the fourth double pin (218) or of the second single pin (212).

18. Vehicle (403) having an electric machine (401) with a stator (1) according to one of the preceding claims.

## Revendications

1. Stator (1) pour une machine électrique (100), comprenant une première face d'extrémité (7), une deuxième face d'extrémité opposée (9) et une pluralité d'épingles (21 - 26) agencées sur des cercles concentriques à différentes distances d'un centre de stator (M) dans des encoches (51 - 58, 71 - 78, 81 - 88) dans le stator, chaque cercle concentrique formant une couche (L1 - L6) ; dans lequel
- le stator (1) comporte au moins deux spires (41 - 43) qui s'étendent sur toute la circonférence du stator (1), formant ainsi une bobine partielle ;
- six épingles (21 - 26) sont respectivement connectées en série les unes aux autres dans différentes couches (L1 - L6) et forment l'une des spires (41 - 43) ;
- une première épingle (21, 27) de la première spire (41) se trouve dans une première encoche (51, 53, 55) dans la cinquième couche (L5) ;
- une deuxième épingle (22) de la première spire (41) se trouve dans une deuxième encoche (52, 54, 56) dans la sixième couche (L6) et est connectée à la première épingle (21) sur la deuxième face d'extrémité (9) au moyen d'un premier type de connexion (61), la deuxième encoche (52, 54, 56) présentant une première distance radiale (11) dans une première direction circonférentielle du stator (1) par rapport à la première encoche (51, 53, 55) ;
- une troisième épingle (23) de la première spire (41) se trouve dans la première encoche (51, 53, 55) dans la quatrième couche (L4) et est connectée à la deuxième épingle (22) sur la première face d'extrémité (7) au moyen d'un deuxième type de connexion (62) ;
- une quatrième épingle (24) de la première spire (41) se trouve dans la deuxième encoche (52, 54, 56) dans la troisième couche (L3) et est connectée à la troisième épingle (23) sur la deuxième face d'extrémité au moyen d'un troisième type de connexion (63) ;
- une cinquième épingle (25) de la première spire (41) se trouve dans la première encoche (51, 53, 55) dans la première couche (L1) et est connectée à la quatrième épingle (24) sur la première face d'extrémité (7) au moyen d'un quatrième type de connexion (64) ;
- une sixième épingle (26) de la première spire (41) se trouve dans la deuxième encoche (52, 54, 56) dans la deuxième couche (L2) et est connectée à la cinquième épingle (25) sur la deuxième face d'extrémité au moyen d'un cinquième type de connexion (65) ;
- une septième épingle (27) de la deuxième spire (42) se trouve dans la cinquième couche (L5) dans une troisième encoche (53) et est connectée à la sixième épingle (26) au moyen d'un sixième type de connexion (66) ;
- entre la troisième encoche (53) et la deuxième encoche (52, 54, 56), il y a la même première distance (11) qu'entre la deuxième encoche et la première encoche ;
- avec la septième épingle (27), la connexion en série des épingles suivantes dans le stator (1) recommence ;
- les premier, deuxième, troisième, quatrième, cinquième et sixième types de connexion (61, 62, 63, 64, 65, 66) sont différents les uns des autres.

2. Stator (1) selon la revendication 1, dans lequel il est prévu trois bobines partielles connectées les unes aux autres au moyen d'un septième type de connexion (67) ou d'un huitième type de connexion (68) et qui forment une bobine (201, 202).

3. Stator (1) selon la revendication 2, dans lequel le stator présente trois phases, deux bobines (201, 202) étant respectivement associées à l'une des trois phases de telle sorte que les épingles (21 - 38b) de deux bobines associées à une même phase se trouvent respectivement dans trois encoches adjacentes (51 - 56, 71 - 76, 81 - 86,).

4. Stator (1) selon la revendication 3, dans lequel les entrées (101, 105, 111, 115, 121, 125) de chacune des épingles d'extrémité (21, 31) de deux bobines (201, 202) sont reliées l'une à l'autre par un neuvième type de connexion.

5. Stator (1) selon la revendication 4, dans lequel les sorties (103, 107, 113, 117, 123, 127) de chacune des épingles d'extrémité (28b, 38b) des deux bobines (201, 202) sont connectées l'une à l'autre et les deux bobines (201, 202) sont ainsi connectées en parallèle.

6. Stator (1) selon l'une quelconque des revendications précédentes, dans lequel le deuxième type de connexion (62) comprend une première épingle double (215) formée à partir de la deuxième épingle (22, 22a, 22b, 32, 32a, 32b) et de la troisième épingle (23, 23a, 23b, 33, 33a, 33b), la première épingle double (215) comportant deux pieds d'épingle (61b, 63a) recourbés vers l'intérieur avec chacun un point de soudure (233, 232) et couvrant la première distance radiale (11).

7. Stator (1) selon l'une quelconque des revendications précédentes, dans lequel le quatrième type de connexion (64) comprend une deuxième épingle double (216) formée à partir de la quatrième épingle (24, 24a, 24b, 34, 34a, 34b) et de la cinquième épingle (25, 25a, 25b, 35, 35a, 35b), la deuxième épingle double (216) comportant deux pieds d'épingle (63b, 65b) recourbés vers l'intérieur avec chacun un point de soudure (235, 234) et couvrant la première distance radiale (11).

8. Stator (1) selon l'une quelconque des revendications précédentes, dans lequel le sixième type de connexion (66) comprend une troisième épingle double (217) formée à partir de la sixième épingle (26, 26a, 26b, 36, 36a, 36b, 36(2), 36a(2), 36b(2)) et de la septième ou neuvième épingle (27, 27a, 27b, 37, 37a, 37b, 39, 39a, 39b), la troisième épingle double (217) comportant deux pieds d'épingle (61a, 65b) recourbés vers l'extérieur avec chacun un point de soudure (236, 231) et couvrant la première distance radiale (11).

9. Stator (1) selon l'une quelconque des revendications précédentes, dans lequel le septième type de connexion (67) comprend une quatrième épingle double (218) formée à partir d'une deuxième ou d'une quatrième épingle d'extrémité (28, 28a) et d'une troisième ou d'une cinquième épingle d'extrémité (21, 21a), la quatrième épingle double (218) comportant deux pieds d'épingle (65b, 61a) recourbés vers l'extérieur avec chacun un point de soudure (236, 231) et couvrant une deuxième distance radiale (13).

10. Stator (1) selon l'une quelconque des revendications précédentes, dans lequel le huitième type de connexion (68) comprend une cinquième épingle double (219) formée à partir d'une huitième ou d'une dixième épingle d'extrémité (38, 38a) et d'une neuvième ou d'une onzième épingle d'extrémité (31a, 31b), la cinquième épingle double (219) comportant deux pieds d'épingle (63a, 61b) recourbés vers l'intérieur avec chacun un point de soudure (233, 232) et couvrant une deuxième distance radiale (13).

11. Stator (1) selon l'une quelconque des revendications précédentes, dans lequel une première épingle simple (211) comprend une première épingle d'extrémité (21) et comporte un pied d'épingle (61a) recourbé dans le sens des aiguilles d'une montre avec un point de soudure (231) .

12. Stator (1) selon l'une quelconque des revendications précédentes, dans lequel une deuxième épingle simple (212) comprend une sixième épingle d'extrémité (28b) et comporte un pied d'épingle (65b) recourbé dans le sens contraire des aiguilles d'une montre avec un point de soudure (236).

13. Stator (1) selon l'une quelconque des revendications précédentes, dans lequel une troisième épingle simple (213) comprend une septième épingle d'extrémité (31) et comporte un pied d'épingle (61b) recourbé dans le sens contraire des aiguilles d'une montre avec un point de soudure (232).

14. Stator (1) selon l'une quelconque des revendications précédentes, dans lequel une quatrième épingle simple (214) comprend une douzième épingle d'extrémité (38b) et comporte un pied d'épingle (63a) recourbé dans le sens des aiguilles d'une montre avec un point de soudure (233).

15. Stator (1) selon l'une quelconque des revendications précédentes, dans lequel le premier type de connexion (61) est formé par une connexion soudée d'un premier point de soudure (231) au pied d'épingle (61a) de la troisième épingle double (217) ou de la quatrième épingle double (218) ou de la première épingle simple (211) avec un deuxième point de soudure (232) au pied d'épingle (61b) de la première épingle double (215) ou de la cinquième épingle double (219) ou de la troisième épingle simple (213).

16. Stator (1) selon l'une quelconque des revendications précédentes, dans lequel le troisième type de connexion (63) est formé par une connexion soudée d'un troisième point de soudure (233) au pied d'épingle (63a) de la première épingle double (215) ou de la cinquième épingle double (219) avec un quatrième point de soudure (234) au pied d'épingle (63b) de la deuxième épingle double (216).

17. Stator (1) selon l'une quelconque des revendications précédentes, dans lequel le cinquième type de connexion (65) est formé par une connexion soudée d'un cinquième point de soudure (235) au pied d'épingle (65a) de la deuxième épingle double (216) avec un sixième point de soudure (236) au pied d'épingle (65b) de la troisième épingle double (217) ou de la quatrième épingle double (218) ou de la deuxième épingle simple (212).

18. Véhicule (403) comprenant une machine électrique (401) ayant un stator (1) selon l'une quelconque des revendications précédentes.
